(19) Europäisches Patentamt
European Patent Office
Office européen des brevets

(11) **EP 3 003 538 B1**

(12) **EUROPÄISCHE PATENTSCHRIFT**

(45) Veröffentlichungstag und Bekanntmachung des Hinweises auf die Patenterteilung:
**05.05.2021 Patentblatt 2021/18**

(21) Anmeldenummer: **14727763.6**

(22) Anmeldetag: **22.05.2014**

(51) Int Cl.:
**B01D 67/00** (2006.01)  **B01D 69/02** (2006.01)
**B01D 69/08** (2006.01)  **B01D 71/34** (2006.01)
**B01D 71/76** (2006.01)  **B01D 61/36** (2006.01)
**B01D 71/32** (2006.01)

(86) Internationale Anmeldenummer:
**PCT/EP2014/060527**

(87) Internationale Veröffentlichungsnummer:
**WO 2014/191296 (04.12.2014 Gazette 2014/49)**

(54) **MIKROPORÖSE POLYVINYLIDENFLUORID-MEMBRAN**

MICROPOROUS POLYVINYLIDENE FLUORIDE MEMBRANE

MEMBRANE DE POLYFLUORURE DE VINYLIDÈNE MICROPOREUSE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.05.2013 EP 13169698**

(43) Veröffentlichungstag der Anmeldung:
**13.04.2016 Patentblatt 2016/15**

(73) Patentinhaber: **3M Innovative Properties Company**
**St. Paul, MN 55133-3427 (US)**

(72) Erfinder:
- **SCHUSTER, Oliver**
  **58285 Gevelsberg (DE)**
- **HUANG, Quan**
  **58332 Schwelm (DE)**
- **DUONG, Phung**
  **45257 Essen (DE)**
- **BAUER, Karl**
  **63874 Dammbach (DE)**
- **ANSORGE, Wolfgang**
  **45136 Essen (DE)**

(74) Vertreter: **Vossius & Partner**
**Patentanwälte Rechtsanwälte mbB**
**P.O. Box 86 07 67**
**81634 München (DE)**

(56) Entgegenhaltungen:

US-A- 6 146 747   US-A1- 2003 094 409
US-A1- 2008 210 624   US-A1- 2009 283 469
US-A1- 2011 239 865   US-B1- 6 497 752

- "Solef® & Hylar® PVDF Polyvinylidene fluorideDesign and Processing Guide", , 27 July 2009 (2009-07-27), pages 1-72, XP055453863, Retrieved from the Internet: URL:https://www.equflow.com/sites/default/files/bijlagen/bestanden/solef_hylar_2009. pdf [retrieved on 2018-02-23]
- Solvay: "SPECIALTY POLYMERS Solef PVDF Design & Processing Guide", , 20 December 2017 (2017-12-20), XP055584423, Retrieved from the Internet: URL:https://www.solvay.com/sites/g/files/srpend221/files/2018-08/Solef-PVDF-Design-and-Processing-Guide_EN-v2.7_0.pdf [retrieved on 2019-04-30]
- "Solution Processing Guide for Polymer Membranes Introduction", Technical Bulletin, Solvay Advanced Polymers, 1 January 2008 (2008-01-01), page 10 pp, XP055184321, Retrieved from the Internet: URL:http://doc.diytrade.com/docdvr/450410/43218107/1427599665.pdf [retrieved on 2015-04-20]

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft eine hydrophobe Hohlfasermembran für die Membrandestillation aus einem Vinylidenfluorid-Polymer, wobei die Hohlfasermembran eine Wand mit einer Wanddicke, eine äußere Oberfläche an ihrer Außenseite und eine innere Oberfläche an ihrer ihrem Lumen zugewandten Innenseite aufweist,

- wobei die Hohlfasermembran an ihrer inneren und an ihrer äußeren Oberfläche eine durchgehende Haut aufweist,
- wobei in der Haut der inneren Oberfläche sowie in der Haut der äußeren Oberfläche Poren ausgebildet sind und
- wobei die Hohlfasermembran, angrenzend an die Haut an der inneren Oberfläche, eine Stützschicht mit mikroporöser, schwammartiger und offenporiger Struktur und mit über der Wanddicke im wesentlichen isotroper Porenstruktur besitzt, die sich über mindestens 80 % der Wanddicke erstreckt und Poren mit einem mittleren Durchmesser von weniger als 1 $\mu$m aufweist,

dadurch gekennzeichnet,

- dass das die Struktur der Hohlfasermembran aufbauende Vinylidenfluorid- Polymer ein Gewichtsmittel des Molekulargewichts Mw, bestimmt wie im Experimentalteil der Beschreibung, im Bereich von 550.000 bis 700.000 Dalton und eine durch das Verhältnis aus dem Gewichtsmittel Mw und dem Zahlenmittel $M_N$ des Molekulargewichts gegebene Polydispersität, bestimmt wie im Experimentalteil der Beschreibung, von größer 3,0 aufweist,
- dass die Poren in der Haut der äußeren Oberfläche und die Poren in der Haut der inneren Oberfläche einen geschlossenen Umfang in der Ebene der Haut aufweisen und die Poren in der Haut der äußeren bzw. der inneren Oberfläche ein Verhältnis ihrer Längserstreckung in Richtung der Längsachse der Hohlfasermembran zu ihrer Quererstreckung in Umfangsrichtung der Hohlfasermembran von höchstens 10 aufweisen und die Poren in der inneren Haut der inneren Oberfläche einen Durchmesser von höchstens 3 $\mu$m aufweisen,
- dass die Poren in der inneren Oberfläche kleiner als die Poren in der äußeren Oberfläche sind und die Poren im isotropen Bereich der Stützschicht weisen einen kleineren mittleren Durchmesser aufweisen als die Poren in der Haut der äußeren Oberfläche,
- dass die Porosität der Hohlfasermembran, bestimmt wie im Experimentalteil der Beschreibung, im Bereich von 50 bis 90 Vol.-%, die Wanddicke im Bereich von 50 bis 300 $\mu$m und der Durchmesser des Lumens im Bereich von 100 bis 500 $\mu$m liegt und
- dass die Hohlfasermembran einen nach der Blaspunktmethode ermittelten maximalen Trennporendurchmesser $d_{max}$ im Bereich von 0,3 bis 0,7 $\mu$m aufweist.

Mikroporöse Polymermembranen werden in verschiedensten Bereichen industrieller, pharmazeutischer oder medizinischer Anwendungen zur Präzisionsfiltration eingesetzt. In diesen Anwendungen gewinnen Membrantrennprozesse zunehmend an Bedeutung, da diese Prozesse den Vorteil bieten, dass die zu trennenden Stoffe thermisch nicht belastet oder gar geschädigt werden. Mikrofiltrationsmembranen ermöglichen beispielsweise die Entfernung feiner Teilchen oder Mikroorganismen mit Größen bis in den Submikronbereich und sind daher für die Herstellung von gereinigtem Wasser für die Verwendung in Laboratorien oder für die Halbleiterindustrie geeignet. Zahlreiche weitere Anwendungen von Membrantrennprozessen sind aus der Getränkeindustrie, der Biotechnologie oder der Abwassertechnologie bekannt.

In zunehmendem Maße werden Membranen auch zur Membrandestillation eingesetzt. Die Membrandestillation ist eine Kombination aus einer konventionellen thermischen Destillation und einer Membranfiltration. Es handelt sich dabei um ein thermisch getriebenes Separationsverfahren, bei dem die Separation - wie bei der konventionellen Destillation - aufgrund eines Phasenwechsels erfolgt. Beispielsweise wird bei einer Aufbereitung von Salzwasser über Membrandestillation eine hydrophobe Membran eingesetzt, die eine Barriere für die flüssige Phase, d.h. für das Salzwasser, darstellt. Für die dampfförmige Phase, d.h. für Wasserdampf, ist die Membran jedoch durchlässig und Wasserdampf kann durch die Poren der Membran permeieren. Die treibende Kraft für den Prozess bildet ein Partialdampfdruckgefälle, welches üblicherweise durch eine Temperaturdifferenz auf den beiden Seiten der Membran hervorgerufen wird. In der Regel wird hierfür das aufzubereitende Salzwasser erwärmt und auf der einen Seite der hydrophoben Membran entlanggeführt. Die andere Seite der Membran wird zur Realisierung der erforderlichen Temperaturdifferenz auf einem niedrigeren Temperaturniveau gehalten. Dabei kann der Prozess so gefahren werden, dass es auf der Permeatseite der Membran zur Kondensation der durch die Membran permeierenden Wassermolekülen kommt. Der Prozess kann jedoch auch so geführt werden, dass die übertretenden Wassermoleküle dampfförmig abtransportiert werden und in einem separaten Kondensator kondensiert werden.

Die selektive Eigenschaft einer Membran, die zur Membrandestillation (MD) verwendet wird, beruht also auf dem Rückhalt von flüssigem Wasser bei gleichzeitiger Permeabilität für freie Wassermoleküle, d.h. für Wasserdampf. In der Anwendung ist wichtig, dass das aufzubereitende Wasser nicht oder nur unwesentlich in die Membran eindringt und die Poren füllt. Um den Durchtritt von aufzubereitendem Wasser durch die Membran zu vermeiden und allein den Durchtritt von Wasserdampf bzw. Wassermolekülen zu erlauben, ist es erforderlich, dass die Poren der Membran mit Luft gefüllt bleiben. Hierzu muss der hydrostatische Druck auf der Seite der Membran, auf der sich das aufzubereitende Wasser befindet, kleiner sein als der Durchtrittsdruck, d.h. der Druck, bei dem ein Durchtritt des Wassers durch die Membran stattzufinden beginnt.

Im Bereich der Membrandestillation eingesetzte Membranen sind hierzu aus einem hydrophoben Polymer wie z.B. Polytetrafluorethylen (PTFE), Polyvinylidenfluorid (PVDF) oder Polypropylen (PP) gefertigt. Derartige Membranpolymere zeichnen sich gleichzeitig durch eine hohe Temperaturstabilität sowie durch eine gute Chemikalienbeständigkeit aus, die u.a. bei einer Reinigung dieser Membranen mit Säuren und Laugen erforderlich ist. Gleichzeitig ist es erforderlich, dass die Membranen für die Membrandestillation eine hohe Druckstabilität besitzen.

Die US-A-6 146 747 betrifft PVDF-Membranen, die durch Zusatz eines hydrophilen Polymers wie insbesondere Polyvinylpyrrolidon hydrophil sind. In einer Ausführungsform weisen die Membranen der US-A-6 146 747 eine über mindestens 80% der Wanddicke sich erstreckende isotrope Struktur auf. Die in der US-A-6 146 747 offenbarten Hohlfasermembranen besitzen an ihrer Außenseite kleinere Poren als an ihrer Innenseite. Der isotrope Bereich im Inneren ist relativ grobporig mit Poren im Bereich von 10 $\mu$m und weist eine filamentartige Netzwerkstruktur auf. Die Herstellung der Membranen erfolgt aus geringfügig oberhalb Raumtemperatur temperierten Lösungen, wobei die Koagulation durch Eintauchen in einen Nichtlöser für das PVDF ausgelöst wird, welcher das PVDF nicht zu lösen vermag. Der Prozess basiert also auf einer Nichtlöser-induzierten Phasentrennung.

In der EP-0 734 759 B1 werden Membranen aus PVDF offenbart, die über einen Membranbildungsprozess mit thermisch induzierter flüssig-flüssig Phasentrennung hergestellt werden. Die Membranen zeigen eine faserartige Struktur mit faser-oder filamentförmigen Strängen, die entlang ihrer Längserstreckung an mehreren zueinander beabstandeten Stellen miteinander verbunden sind. Im Falle, dass es sich bei den Membranen der EP-0 734 759 B1 um Hohlfasermembranen handelt, sind die Stränge in axialer Richtung orientiert. Bei der Herstellung dieser Hohlfasermembranen wird eine geeignete membranbildende PVDF-Lösung durch den inneren Ringspalt einer Hohlfadendüse mit drei Ringspalten und einer zentralen Öffnung extrudiert. Gleichzeitig mit der membranbildenden PVDF-Lösung wird durch die zentrale Öffnung der Hohlfadendüse ein das Lumen ausbildendes Fluid, durch den mittleren Ringspalt eine Beschichtungsflüssigkeit und durch den äußeren Ringspalt ein Abkühlmedium extrudiert. Die Membranen der EP-0 734 759 B1 sind durchlässig für Wasser und besitzen gemäß den Beispielen Wasserpermeabilitäten bis zu 300 ml/(min·m$^2$·bar). Nachteilig ist bei derartigen Membranen, dass sich auf Grund ihres Aufbaus aus faser- oder filamentförmigen Strängen die Zwischenräume zwischen den filamentförmigen Strängen und damit die Größe der Poren unter Druckbelastung verändern können.

Die EP-A-1 520 874 betrifft Membranen u.a. aus Polyvinylidenfluorid, deren Wand aus einer netzwerkartigen Struktur in Kombination mit einer Struktur mit kugelförmigen oder nahezu kugelförmigen Partikeln aufgebaut ist, die schichtförmig zueinander angeordnet sind. Ziel der EP-A-1 520 874 ist es, Membranen mit einer guten Durchlässigkeit für Wasser, d.h. mit einer hohen Permeabilität für Wasser zur Verfügung zu stellen. Die Membranen der EP-A-1 520 874 lassen sich ebenfalls nach einem thermisch induzierten Phasenseparationsprozess herstellen.

Die EP-A-1 913 992 beschreibt für die Behandlung von Wasser geeignete Hohlfasermembranen aus PVDF, die nach einer Benetzungsbehandlung eine hohe Permeabilität für Wasser aufweisen und eine mittlere Porengröße im Bereich 0,05 bis 0,2 $\mu$m aufweisen. Das Verfahren der EP-A-1 913 992 zur Herstellung der Hohlfasermembranen umfasst die Schmelzextrusion einer Zusammensetzung aus dem PVDF-Polymer, eines Plastifizierers und eines hohen Anteils eines guten Lösemittels für PVDF, die Abkühlung und Erstarrung der zu einem Hohlfaden ausgeformten Zusammensetzung in einer Kühlflüssigkeit sowie die Extraktion des Plastifizierers, um so die Hohlfasermembran zu erhalten. Als gute Lösemittel für PVDF werden Lösemittel wie z.B. N-Methylpyrrolidon, Dimethylformamid oder Dimethylsulfoxid usw. verwendet. Als Abkühlmedium werden Gase oder inerte Flüssigkeiten eingesetzt. Nach Extraktion des Plastifizierers werden die erhaltenen Membranen verstreckt. Ähnliche Membranen werden nach der EP-A-1 932 582 erhalten, bei deren Herstellung sich an den Verfahrensschritt der Verstreckung ein zweistufiger Relaxationsschritt anschließt.

In der US-A-5 013 339 werden PVDF-Membranen offenbart, die je nach Ausführung des Herstellverfahrens für die Mikrofiltration, die Ultrafiltration, die Membrandestillation oder die Dialyse einsetzbar sein sollen und eine isotrope oder anisotrope Struktur über dem Membranquerschnitt aufweisen können. Das Verfahren zur Herstellung dieser Membranen basiert ebenfalls auf einem thermisch induzierten Phasenseparationsprozess, bei dem als Lösemittelsystem ein Glycerinmonoacetat, ein Glycerindiacetat oder ein Glycerintriacet oder Mischungen daraus eingesetzt werden können, dem gegebenenfalls Glycerin zugesetzt sein kann. Die Abkühlung und Koagulation erfolgt in einem Nichtlöser für das Polyvinylidenfluorid, der vorzugsweise Wasser ist. Nach einem ähnlichen Prozess werden auch die in der DE-A-3329578 offenbarten PVDF-Membranen hergestellt, wobei bei dem dort beschriebenen Verfahren die Abkühlflüssigkeit ein Spinnrohr durchläuft.

Die US-A-2005/0058821 beschreibt die Herstellung von PVDF-Membranen mittels eines thermisch induzierten Phasenseparationsprozesses aus Lösungen von Polyvinylidenfluorid in Glycerintriacetat. Die sich dabei ausbildenden PVDF-Membranen weisen eine aus Aggregaten von miteinander über Fibrillen verbundenen Partikeln bzw. eine aus Aggregaten von Sphäruliten aufgebaute Struktur auf. Wenngleich die US-A-2005/0058821 erwähnt, dass auch Hohlfasermembranen nach dem dort offenbarten Prozess hergestellt werden können, beziehen sich die Ausführungen in dieser Schrift und insbesondere auch die Beispiele allein auf Flachmembranen.

Die US-A-2004/0135274 betrifft Membranen aus Vinylidenfluorid Homopolymeren oder Copolymeren, die ebenfalls über ein Verfahren mit thermisch induzierter Phasenseparation hergestellt werden. Die Membranen der US-A-2004/0135274 haben eine isotrope Netzwerkstruktur mit dreidimensionalen Verästelungen in beliebige Raumrichtungen und es werden Membranen angestrebt, die poröse Oberflächen aufweisen. Die Membranen der US-A-2004/0135274 werden zur Filtration eingesetzt wie beispielsweise zur Abtrennung von Partikeln aus Flüssigkeiten und weisen eine hohe Permeabilität für Wasser auf. In einer Ausführungsform handelt es sich bei den Membranen der US-A-2004/0135274 um Hohlfasermembranen, bei deren Herstellung Abkühlung durch direkten Kontakt mit einem flüssigen Abkühlmedium von Vorteil ist. In Fällen, dass das Abkühlmedium eine geringe Affinität zum Vinylidenfluorid Homopolymeren oder Copolymeren hat, wie dies z.B. bei Wasser, Ethylenglykol oder Dekalin der Fall ist, weist die Oberfläche der resultierenden Membran eine hautähnliche Struktur oder eine aus einem partikelförmigen Material zusammengesetzte Struktur auf. Bei hoher Affinität des Lösemittels für das Vinylidenfluorid Homopolymer oder Copolymer werden nach den Ausführungen der US-A-2004/0135274 offenporige Oberflächen erhalten. Bei dem Verfahren der US-A-2004/0135274 erfolgt die Erstarrung der Polymerphase durch Kristallisation.

Hohlfasermembranen aus Vinylidenfluorid Homopolymeren oder Copolymeren sind auch Gegenstand der US-A-2009/0283469. Die Membranen der US-A-2009/0283469 werden mittels eines Verfahrens mit thermisch induzierter Phasenseparation hergestellt, bei dem als Lösemittelsystem latente Löser und vorzugsweise wasserlösliche latente Löser eingesetzt werde, wobei die latenten Löser das Polymer nicht bei Raumtemperatur, wohl aber bei hohen Temperaturen lösen. Die Hohlfasermembranen der US-A-2009/0283469 weisen eine dichte Außenschicht auf und unter der dichten Außenschicht eine homogene Stützschicht mit groberer Struktur. Der Übergang von der Außenschicht in die Stützschicht erfolgt im wesentlichen diskontinuierlich.

Membranen zur Wasseraufbereitung sind bekannt. So beschreibt die US 2009/0283469 A1 mikroporöse PVDF-Membranen für die outside-in-filtration, inside-out filtation und suction filtration. In diesen Filtrationsprozessen wird generell flüssiges Wasser durch die Membranen gedrückt, die Membranen weisen dementsprechend hohe Wasserpermeabilitäten auf.

In US 6 497 752 B1 werden Hohlfasermembranen mit einer Gasaustauschkapazität und einer für die Versorgung von Blut mit Sauerstoff ausreichenden hohen Gasflussraten beschrieben. Diese Membranen sind aus Polyeolefin-Polymeren als Polymerkomponente aufgebaut.

In ähnlicher Weise offenbart die US 2011/239865 A1 Membranen aus PVDF-Polymeren für z.B. das Entgasen von Flüssigkeiten. Die Membranen weisen eine hohe Oxidationsbeständigung gegenüber beispielsweise Ozon auf.

In der US 6 146 747 A werden mikroporöse Membranen zur Mikrofiltration beschrieben. Diese Membranen sind vergleichsweise offenporige Membranen, die einen begrenzten Flußwiderstand gegenüber Flüssigkeiten aufweisen, und in der Lage sind, effizient Partikel aufgrund der Prinizipien von Tortuosität und Minimumporengrößen zu separieren.

US 2008/210624 A1 beschreibt Hohlfasermembranen auf PVDF-Basis, welche u.a. eine große Wasserpermeation aufweisen. In ähnlicher Weise offenbart US 2003/094409 A1 Hohlfasermembranen zur Mikrofiltration bzw. Ultrafiltration in der Wasseraufbereitung. Diese Membranen weisen eine hohe Wasserpermeabilität auf, d.h. sie sind stark durchlässig für flüssiges Wasser.

Bei Anwendungen von Membranen in der Membrandestillation ist für die Permeation der Wasserdampfmoleküle durch die Membranwand ein wichtiges Merkmal der Membranen deren Porentortuosität bzw. Tortuosität, wie dies in M.S. El-Bourawi et al.: "A framework for better understanding membrane destillation separation process", J. of Membrane Science 285 (2006) 3-29, Elsevier, ausgeführt wird. Im Allgemeinen gehen die Membranporen nicht gradlinig durch die Membranwand hindurch und die durch die Membran diffundierenden Moleküle müssen entlang gewundener Pfade durch die Membranwand diffundieren. Je länger diese gewundenen Pfade sind, umso geringer sind die Transmembranflüsse durch die Membran. Die Tortuosität gibt die mittlere Weglänge der Poren im Verhältnis zur Membrandicke an.

Es ist Aufgabe der Erfindung, eine für die Membrandestillation geeignete Membran zur Verfügung zu stellen, die für Membrandestillationsaufgaben bei wässrigen Medien einsetzbar ist, eine hohe Durchlässigkeit für Wasserdampf, jedoch auch bei Beaufschlagung mit hohen Wasserdrücken keine Durchlässigkeit für Wasser aufweist.

Die erfindungsgemäße Aufgabe wird gelöst durch eine eine hydrophobe Hohlfasermembran für die Membrandestillation aus einem Vinylidenfluorid-Polymer, wobei die Hohlfasermembran eine Wand mit einer Wanddicke, eine äußere Oberfläche an ihrer Außenseite und eine innere Oberfläche an ihrer ihrem Lumen zugewandten Innenseite aufweist,

- wobei die Hohlfasermembran an ihrer inneren und an ihrer äußeren Oberfläche eine durchgehende Haut aufweist,
- wobei in der Haut der inneren Oberfläche sowie in der Haut der äußeren Oberfläche Poren ausgebildet sind und

- wobei die Hohlfasermembran, angrenzend an die Haut an der inneren Oberfläche, eine Stützschicht mit mikroporöser, schwammartiger und offenporiger Struktur und mit über der Wanddicke im wesentlichen isotroper Porenstruktur besitzt, die sich über mindestens 80 % der Wanddicke erstreckt und Poren mit einem mittleren Durchmesser von weniger als 1 $\mu$m aufweist,

dadurch gekennzeichnet,

- dass das die Struktur der Hohlfasermembran aufbauende Vinylidenfluorid- Polymer ein Gewichtsmittel des Molekulargewichts Mw, bestimmt wie im Experimentalteil der Beschreibung, im Bereich von 550.000 bis 700.000 Dalton und eine durch das Verhältnis aus dem Gewichtsmittel Mw und dem Zahlenmittel $M_N$ des Molekulargewichts gegebene Polydispersität, bestimmt wie im Experimentalteil der Beschreibung, von größer 3,0 aufweist,
- dass die Poren in der Haut der äußeren Oberfläche und die Poren in der Haut der inneren Oberfläche einen geschlossenen Umfang in der Ebene der Haut aufweisen und die Poren in der Haut der äußeren bzw. der inneren Oberfläche ein Verhältnis ihrer Längserstreckung in Richtung der Längsachse der Hohlfasermembran zu ihrer Quererstreckung in Umfangsrichtung der Hohlfasermembran von höchstens 10 aufweisen und die Poren in der inneren Haut der inneren Oberfläche einen Durchmesser von höchstens 3 $\mu$m aufweisen,
- dass die Poren in der inneren Oberfläche kleiner als die Poren in der äußeren Oberfläche sind und die Poren im isotropen Bereich der Stützschicht weisen einen kleineren mittleren Durchmesser aufweisen als die Poren in der Haut der äußeren Oberfläche,
- dass die Porosität der Hohlfasermembran, bestimmt wie im Experimentalteil der Beschreibung, im Bereich von 50 bis 90 Vol.-%, die Wanddicke im Bereich von 50 bis 300 $\mu$m und der Durchmesser des Lumens im Bereich von 100 bis 500 $\mu$m liegt und

dass die Hohlfasermembran einen nach der Blaspunktmethode ermittelten maximalen Trennporendurchmesser $d_{max}$ im Bereich von 0,3 bis 0,7 $\mu$m aufweist.

Durch die erfindungsgemäße Kombination der Strukturmerkmale wie insbesondere auch der Porengröße und der Porenstruktur über der Wanddicke, der Offenporigkeit der Oberflächen, der Porosität und auch der Membrandimensionen werden hohe Massenflüsse für Wasserdampf erreicht, ohne dass es zu einem Durchbruch von Wasser durch die Membran kommt.

Wie ausgeführt, weist die Hohlfasermembran an ihrer äußeren Oberfläche und an in ihrer inneren Oberfläche eine durchgehende Haut auf. In der Haut der inneren Oberfläche und in der Haut der äußeren Oberfläche und damit in der inneren und der äußeren Oberfläche sind Poren ausgebildet. Die Poren in der äußeren Oberfläche und die Poren in der inneren Oberfläche weisen erfindungsgemäß einen geschlossenen Umfang in der Ebene der jeweiligen Haut auf. Die bedeutet, dass die Poren wie Inseln in der sie umgebenden Haut, d.h. inselförmig ausgebildet und von der jeweiligen Haut umgeben sind. Die Poren bzw. Öffnungen in den Oberflächen der vorliegenden Membran und die sie umgebende Haut weisen eine Insel-im-Meer-Struktur (island-sea-structure) auf, wobei die Poren ("Inseln") als diskontinuierliche Phase in der sie umgebenden Haut angeordnet sind, die eine kontinuierliche Phase ("Meer") mit die Poren bzw. Öffnungen umschließenden Bereichen und Stegen darstellt, die an der jeweiligen Oberfläche in einer Ebene liegen.

Durch die inselförmige Ausbildung der Poren in der inneren und der äußeren Oberfläche mit einem geschlossenen Umfang in der Ebene der jeweiligen Haut unterscheiden sich die erfindungsgemäßen Hohlfasermembranen von Hohlfasermembranen, die an ihren Oberflächen eine netzwerkartige Struktur besitzen, wie sie beispielsweise die Membranen der US-A-2004/0135274 zeigen, oder eine netzwerkartige Struktur in Gestalt orientierter Verästelungen, wie sie für die Membranen der EP-A-0 734 759 offenbart werden. Auf der anderen Seite unterscheidet sich die Struktur der Oberflächen der vorliegenden Membranen von partikulären oder sphärolithischen Strukturen, bei denen die Polymerstruktur der Membran durch kugelförmige oder sphärolithische Partikel ausgebildet ist, die über fibrillenartige Stege miteinander verbunden sein können. Membranen mit derartigen Oberflächenstrukturen werden z.B. in der WO-A-93/22034 gezeigt. Es wurde gefunden, dass die vergleichsweise glatte Oberflächenstruktur der vorliegenden Membran in der Anwendung günstig in Bezug auf ein geringes Fouling bzw. in Bezug auf eine Verringerung bzw. Vermeidung der Einlagerung von Partikeln ist.

Die spezielle Struktur der erfindungsgemäßen Hohlfasermembranen, insbesondere ihre mikroporöse Stützschicht mit schwammartiger, offenporiger und über der Wanddicke isotroper Porenstruktur, die sich über mindestens 80 % der Wanddicke erstreckt und deren Poren einen mittleren Durchmesser von weniger als 1 $\mu$m aufweisen, ist ursächlich für eine hohe Belastbarkeit und gute mechanische Eigenschaften der Membranen in der Anwendung. Mit dieser Struktur unterscheiden sich die erfindungsgemäßen Membranen von Membranen mit einer asymmetrischen Struktur, bei der sich die Porengröße auch innerhalb der Stützschicht verändert, von Membranen, die in ihrer Wand kavernenartige Poren aufweisen oder auch von Membranen, deren Oberflächen und/oder deren Stützstruktur eine partikuläre bzw. sphärolithische Struktur aufweisen. Diese Membranen des Stands der Technik besitzen auf Grund ihrer andersartigen Struktur oftmals nur unzureichende mechanische Eigenschaften wie z.B. eine zu geringe Bruchfestigkeit und Bruchdehnung.

Die homogene, isotrope Struktur der Stützschicht der erfindungsgemäßen Hohlfasermembranen bewirkt bei einer mechanischen Beanspruchung eine gleichmäßige Verteilung der Belastungen über der Membranwand, was zu hohen Druckstabilitäten, hohen Bruchfestigkeiten und hohen Bruchdehnungen führt. Im Hinblick auf die mechanischen Eigenschaften ist gleichzeitig wichtig, dass die Größe der Poren in der Stützschicht in dem angegebenen Bereich bleibt. Insbesondere soll die Stützstruktur keine Fingerporen aufweisen, die vielfach auch als Kavernen oder Macrovoids bezeichnet werden und die eine Größe von mehreren $\mu$m haben können. Derartige Fingerporen zeigen ein ungünstiges Benetzungsverhalten, das in einem frühen Eindringen von Wasser in die Poren resultiert. Die erfindungsgemäßen Membranen weisen stattdessen Poren auf, deren mittlerer Durchmesser kleiner als 1 $\mu$m ist, so dass die Stützschicht also relativ feinporig ist. Vorzugsweise ist der mittlere Durchmesser der Poren in der Stützschicht kleiner als 0,5 $\mu$m.

Die Porenstruktur in der Stützschicht ist erfindungsgemäß im Wesentlichen isotrop. Hierunter ist zum einen zu verstehen, dass der mittlere Durchmesser der Poren in der Stützschicht über die Wanddicke gesehen bei rasterelektronenmikroskopischer Untersuchung mit 2000-facher Vergrößerung im wesentlichen konstant ist. Anders ausgedrückt, kann der Bereich der isotropen Stützstruktur als ein Bereich angesehen werden, in dem Strömungskanäle mit über der Wanddicke im wesentlichen konstanten Durchmessern vorliegen. Natürlich ist zu berücksichtigen, dass die aktuelle Größe der Poren in der isotropen Stützschicht etwas variiert, d.h. in gewissem Ausmaß eine Porengrößenverteilung aufweist, wie dies für jede Membranstruktur gilt, auch wenn die Struktur in der rasterelektronenmikroskopischer Untersuchung isotrop erscheint. Im Rahmen der vorliegenden Erfindung wird daher als ein im wesentlichen konstanter mittlerer Porendurchmesser ein solcher verstanden, der sich in der Erstreckung der Stützschicht über der Membranwand um nicht mehr als +/- 50 % ändert.

Zum anderen ist unter einer im wesentlichen isotropen Porenstruktur gleichzeitig zu verstehen, dass, wenngleich die einzelnen Poren auch eine unregelmäßige oder längliche Form besitzen können, über alle Poren gemittelt die Poren in die Raumrichtungen quer zur Längserstreckung der Hohlfasermembranen im wesentlichen gleiche Ausdehnung aufweisen, wobei Abweichungen zwischen den Ausdehnungen in den einzelnen Raumrichtungen von bis zu 20% eingeschlossen sind. Dabei weisen die erfindungsgemäßen Membranen eine zellartige Struktur auf, die von Porenwandungen umgebene Poren mit z.T. sphärischer und ellipsoider Form erkennen lassen, welche über Öffnungen in ihrer Wand miteinander in Verbindung stehen. Die vorliegende Struktur unterscheidet sich damit beispielsweise von Netzwerkstrukturen mit in den Raumrichtungen beliebig orientierten dreidimensionalen Verästelungen, wie sie z.B. die mikroporösen Membranen der US-A-2004/0135274 oder der EP-A-0 734 759 aufweisen, auf deren diesbezügliche Offenbarung an dieser Stelle ausdrücklich Bezug genommen wird. Auf der anderen Seite unterscheidet sich die Porenstruktur der Membranen der vorliegenden Erfindung von partikulären oder sphärolithischen Strukturen, bei denen die Polymerstruktur der Membran durch kugelförmige oder sphärolithische Partikel ausgebildet ist, die über fibrillenartige Stege miteinander verbunden sein können. Membranen mit derartigen Strukturen werden z.B. in der EP-A-1 230 970 oder der WO-A-93/22034 beschrieben oder in der US-A-2004/0135274 in Fig. 6 offenbart, auf deren diesbezügliche Offenbarung an dieser Stelle ausdrücklich Bezug genommen wird. Ebenso ist die Struktur der erfindungsgemäßen Membran unterschiedlich zu den faserartigen Strukturen mit faser- oder filamentartigen Strängen, wie die Membranen der EP-0 734 759 B1 aufweisen, auf deren diesbezügliche Offenbarung an dieser Stelle ausdrücklich Bezug genommen wird.

Die homogene, isotrope Struktur der Stützschicht mit mikroporöser Porenstruktur, deren Poren einen mittleren Durchmesser von weniger als 1 $\mu$m aufweisen, in Verbindung mit porösen inneren und äußeren Oberflächen ist ausschlaggebend für ausreichend hohe Permeabilitäten für gasförmige Medien wie z.B. Wasserdampf in der Anwendung der erfindungsgemäßen Membran bei der Membrandestillation. Bevorzugt weist die erfindungsgemäße Hohlfasermembran einen Massenfluss für Wasserdampf bzw. einen Transmembranfluss für Wasserdampf von mindestens 35 l/(m$^2$·h), ermittelt an einem Membranmodul der Hohlfasermembran mit einer Membranfläche von 40 cm$^2$ bei einer Temperatur des Salzwasserkreislaufs von 80°C und des Destillatkreislaufs von 30°C, einem Volumenstrom in den Kreisläufen von 200 l/h, einem Druckniveau in den Kreisläufen von 500 mbar am Eingang in den Hohlfasermembranmodul und einer Salzkonzentration im Salzkreislauf von 36 g/l.

Zur Realisierung hoher Transmembranflüsse für Wasserdampf ist es von Vorteil, wenn ein hohes Partialdampfdruckgefälle über der Membranwand bei der Anwendung in der Membrandestillation vorliegt. Auf Grund ihrer ausgewogenen Kombination hinsichtlich ihrer Strukturmerkmale besitzt die erfindungsgemäße Hohlfasermembran eine hohe mechanische Belastbarkeit und ist damit in der Lage, den in der Anwendung auftretenden Differenzdrücken, bei denen auf der Permeatseite oftmals ein Vakuum anliegt, standzuhalten. In einer bevorzugten Ausführungsform besitzt die Hohlfasermembran eine Bruchdehnung von mindestens 50%. In einer weiteren bevorzugten Ausführungsform weist sie eine Bruchfestigkeit von mindestens 400 cN/mm$^2$ auf. Besonders bevorzugt besitzt sie eine Bruchdehnung von mindestens 50% in Verbindung mit einer Bruchfestigkeit von mindestens 400 cN/mm$^2$.

Es hat sich gezeigt, dass das eingesetzte Polyvinylidenfluorid von entscheidendem Einfluss auf die mechanischen Eigenschaften und auch auf die Leistungsdaten der Membran ist. So wurde festgestellt, dass Membranen, bei denen ein Polyvinylidenfluorid mit zu niedrigem Molekulargewicht, d.h. mit einem Gewichtsmittel des Molekulargewichts im Bereich unterhalb von Mw = 550.000 Dalton eingesetzt wurde, die Bruchdehnung sowie die Festigkeit der damit erhaltenen Membranen zu gering waren. Darüber hinaus zeigte sich, dass Membranen aus einem Polyvinylidenfluorid mit einem Gewichtsmittel des Molekulargewichts im Bereich von 550.000 bis 700.000 Dalton, jedoch einer Polydispersität unterhalb von 3, eine Veränderung der Porenstruktur zu erkennen ist, bei der die Poren in geringerem Maße miteinander verbunden sind, also eine geringere Interkonnektivität zeigen. Dies hat zum Ergebnis, dass die erhaltenen Transmembranflüsse für Isopropanol abnehmen und insbesondere die Tortuosität zunimmt. Bevorzugt weist das die Struktur der Hohlfasermembran aufbauende Vinylidenfluorid-Polymer eine Polydispersität von größer 4 auf. Vorzugsweise beträgt die Polydispersität höchstens 7. Es wurde beobachtet, dass Membranen aus einem Polyvinylidenfluorid mit einem Gewichtsmittel des Molekulargewichts im Bereich von 550.000 bis 700.000 Dalton, jedoch mit einer Polydispersität von größer als 7, die erhaltenen Membranstrukturen von der erfindungsgemäß gewünschten Membranstruktur abweichen können.

Um des Weiteren den in der Anwendung auftretenden Drücken auf den Seiten der Hohlfasermembran standzuhalten, ohne dass es zu einem Durchtritt von Wasser durch die Membranwand kommt, weist die erfindungsgemäße Hohlfasermembran einen nach der Blaspunktmethode ermittelten maximalen Trennporendurchmesser $d_{max}$ im Bereich von 0,3 bis 0,7 $\mu$m auf. Bei maximalen Trennporendurchmessern oberhalb von 0,7 $\mu$m besteht eine zunehmende Gefahr, dass bei den in der Anwendung herrschenden Betriebsdrücken und deren Schwankungen auch unter Einbeziehung von Temperatureffekten Wasser in die Membran ein- und durch sie hindurchtritt. Maximale Trennporendurchmesser unterhalb von 0,3 $\mu$m wirken sich in zunehmendem Maße in einer Abnahme der erzielbaren Transmembranflüsse für Wasserdampf aus. Bevorzugt weist die erfindungsgemäße Hohlfasermembran daher einen nach der Blaspunktmethode ermittelten maximalen Trennporendurchmesser $d_{max}$ im Bereich von 0,4 bis 0,55 $\mu$m auf.

Die erfindungsgemäße Hohlfasermembran hat eine Porosität im Bereich von 50 bis 90 Vol.-%. Unterhalb von 50 Vol.-% zeigt sich in der Anwendung bei der Membrandestillation eine deutliche Abnahme der erzielbaren Transmembranflüsse für Wasserdampf. Oberhalb von 90 Vol.-% zeigt sich auf der anderen Seite, dass die mechanischen Eigenschaften der Hohlfasermembran abnehmen. Es ist von Vorteil, wenn die Porosität der Hohlfasermembran im Bereich von 70 bis 85 Vol.-% liegt.

Eine Voraussetzung für die Erzielung hoher Transmembranflüsse für Wasserdampf ist auch, dass die Membranwand insgesamt eine hohe Durchlässigkeit bzw. Durchgängigkeit für Medien zeigt. Hierfür sind insbesondere Porosität, Porenstruktur, Porengröße und Verteilung und Durchgängigkeit der Poren in der Wand sowie auch die Oberflächenporosität ausschlaggebend. Als Maß für eine hohe Durchlässigkeit wird bei hydrophoben Membranen der Transmembranfluss für Isopropanol angesehen. Wie ausgeführt, besitzt die vorliegende Hohlfasermembran eine hohe Durchlässigkeit und hat in einer bevorzugten Ausführungsform einen Transmembranfluss für Isopropanol im Bereich von 2 bis 8 ml/(cm$^2$·min·bar) und besonders bevorzugt einen Transmembranfluss für Isopropanol im Bereich von 3 bis 6 ml/(cm$^2$·min·bar).

Erfindungsgemäß weist die Hohlfasermembran eine Wanddicke im Bereich 50 bis 300 $\mu$m auf. Hierdurch lassen sich bei Einhaltung auch der weiteren erfindungsgemäß geforderten Struktureigenschaften auf der einen Seite die gewünschten hohen Transmembranflüsse für Wasserdampf realisieren. Auf der anderen Seite verfügen die Hohlfasermembranen über eine genügend hohe mechanische Belastbarkeit. Darüber hinaus werden Wärmeverluste über die Membranwand hinweg, die in der Anwendung bei der Membrandestillation zu einem Effizienzverlust führen, genügend klein gehalten. Bevorzugt ist eine Wanddicke im Bereich von 100 bis 200 $\mu$m und besonders bevorzugt im Bereich von 125 bis 175 $\mu$m. Ebenso ist von Vorteil, wenn der Durchmesser des Lumens der Hohlfasermembran im Bereich von 200 bis 450 $\mu$m und besonders vorteilhaft, wenn er im Bereich von 290 bis 370 $\mu$m liegt.

Die Poren weisen in der inneren Oberfläche der Hohlfasermembran einen Durchmesser von höchstens 3 $\mu$m auf. Bei einem derartigen Porendurchmesser an der inneren Oberfläche zeigt sich bei lumenseitiger Anströmung in Membrandestillations-Anwendungen eine deutlich verringerte Gefahr des Eintritts von Wasser in die Membran. Hierbei ist unter dem Durchmesser der Poren bei nicht-kreisrunder Porenform die Länge der kürzeren Hauptachse der Pore zu verstehen. Besonders bevorzugt haben die Poren in der inneren Oberfläche der Hohlfasermembran einen Durchmesser von höchstens 2 $\mu$m.

Die Poren in der inneren Oberfläche sind kleiner als die Poren in der äußeren Oberfläche. Insbesondere bei Anwendungen in der Membrandestillation, bei denen die äußere Oberfläche der Hohlfasermembran die Permeatseite ist, bei denen auf der Permeatseite der Membran eine Gasphase vorliegt und bei denen insbesondere darüber hinaus auf der Permeatseite ein Vakuum anliegt, wurde gefunden, dass größere Poren in der äußeren Oberfläche für den Abtransport des Permeats aus der Membran von Vorteil sind.

Wie anhand von rasterelektronenmikroskopischer (REM-) Aufnahmen beispielsweise bei 500- bis 2000-facher Vergrößerung erkennbar ist, weist die vorliegende Hohlfasermembran in der äußeren Oberfläche Poren auf, die größer als die Poren im Bereich der Stützschicht mit isotroper Porenstruktur sind. Die Poren im isotropen Bereich der Stützschicht weisen also einen kleineren mittleren Durchmesser auf als die Poren in der äußeren Oberfläche bzw. in der Haut der äußeren Oberfläche. Die Außenhaut ist demnach grobporiger als die Stützschicht in ihrem isotropen Bereich.

Es hat sich als vorteilhaft in Bezug auf die Temperaturstabilität der Membran herausgestellt, d.h. insbesondere in Bezug auf einen eventuellen Schrumpf der Membran bei höheren Temperaturen, der mit einer Veränderung der Porenstruktur einhergeht, wenn die Membran bei ihrer Herstellung keiner nennenswerten Verstreckung unterzogen wurde. Eine hohe Verstreckung wirkt sich in Poren an den Oberflächen aus, die in Richtung der Erstreckung der Hohlfasermembran einen wesentlich höheren Durchmesser aufweisen als z.B. in Umfangsrichtung. Deshalb weisen die Poren in der äußeren und/oder in der inneren Oberfläche der Hohlfasermembran ein Verhältnis ihrer längsten Achse zu ihrer kürzesten Achse von höchstens 10 und bevorzugt von höchstens 5 auf.

Die erfindungsgemäße Hohlfasermembran lässt sich mittels eines Verfahrens herstellen, bei dem die Membranausbildung über einen thermisch induzierten Phasenseparationsprozess erfolgt.

Eine weitere Aufgabe wird daher durch ein Verfahren zur Herstellung einer solchen hydrophoben Hohlfasermembran aus einem Vinylidenfluorid Homopolymer oder Copolymer gelöst, wobei das Verfahren mindestens die folgenden Schritte umfasst:

a) Herstellung einer homogenen Spinnlösung von 20-40 Gew.-% einer Polymerkomponente aus mindestens einem Vinylidenfluorid-Polymer, in 80-60 Gew.-% eines Lösemittelsystems, wobei die Spinnlösung aus Polymerkomponente und Lösemittelsystem bei Abkühlung eine kritische Entmischungstemperatur und eine Erstarrungstemperatur aufweist und unterhalb der kritischen Entmischungstemperatur im flüssigen Aggregatzustand eine Mischungslücke und wobei das Lösemittelsystem eine Verbindung A und eine Verbindung B enthält, welche bei der Lösetemperatur flüssig und homogen miteinander mischbar sind, und wobei als Verbindung A ein Löser für die Polymerkomponente ausgewählt wird und die Verbindung B ein Nichtlöser für die Polymerkomponente ist,

b) Ausformen der Spinnlösung zu einer Hohlfaser mit einer äußeren Oberfläche an seiner Außenseite und einer inneren Oberfläche an seiner Innenseite in einer Hohlfaserdüse, welche eine Werkzeugtemperatur oberhalb der kritischen Entmischungstemperatur aufweist,

c) Abkühlung der Hohlfaser mittels eines Abkühlmediums, welches auf eine Abkühltemperatur unterhalb der Erstarrungstemperatur temperiert ist, mit einer solchen Geschwindigkeit, dass eine thermodynamische Nichtgleichgewichts-flüssig-flüssig-Phasentrennung in eine polymerreiche und eine polymerarme Phase und anschließend bei Unterschreiten der Erstarrungstemperatur Erstarrung der polymerreichen Phase erfolgt,

d) gegebenenfalls Entfernen des Lösemittelsystems aus der Hohlfaser,

wobei das Verfahren dadurch gekennzeichnet ist,

- dass die Polymerkomponente ein Gewichtsmittel des Molekulargewichts Mw im Bereich von 550.000 bis 700.000 Dalton und eine durch das Verhältnis aus dem Gewichtsmittel Mw und dem Zahlenmittel $M_N$ des Molekulargewichts gegebene Polydispersität von größer 3,0 aufweist, und
- dass die Hohlfaser zur Abkühlung mit ihrer äußeren Oberfläche mit einem flüssigen Abkühlmedium in Kontakt gebracht wird, welches chemisch nicht mit der Polymerkomponente reagiert und welches einen Löser und einen Nichtlöser für die Polymerkomponente enthält.

Überraschenderweise hat sich gezeigt, dass bei Einhaltung dieser Verfahrensbedingungen die erfindungsgemäße Hohlfasermembran aus einem Vinylidenfluorid Homopolymer oder Copolymer mit mikroporöser, schwammartiger und offenporiger Struktur erhalten werden kann, die angrenzend an die Haut an ihrer inneren Oberfläche eine Stützschicht mit über der Wanddicke im wesentlichen isotroper Porenstruktur besitzt, welche sich über mindestens 80 % der Wanddicke erstreckt und Poren mit einem mittleren Durchmesser von weniger als 1 μm aufweist, und die an ihrer inneren und an ihrer äußeren Oberfläche eine durchgehende Haut aufweist, in der Poren inselförmig ausgebildet sind und einen geschlossenen Umfang in der Ebene der Haut aufweisen. Hierbei hat sich gezeigt, dass insbesondere die Auswahl des Vinylidenfluorid Homopolymers oder Copolymers im Hinblick auf das Molekulargewicht sowie auf die Polydispersität und die Auswahl des Abkühlmediums Einfluss auf die Ausbildung der Membranstruktur hat.

Das erfindungsgemäße Verfahren beruht auf einem thermisch induzierten Phasenseparationsprozess mit flüssig-flüssig-Phasentrennung. Erfindungsgemäß bilden die Polymerkomponente und das die Verbindungen A und B enthaltende Lösemittelsystem ein binäres System, das im flüssigen Aggregatzustand einen Bereich aufweist, in dem das Gesamtsystem als homogene Lösung vorliegt, und einen Bereich, in dem es eine Mischungslücke besitzt. Wird ein solches System aus dem Bereich, in dem es als homogene Lösung vorliegt, unter die kritische Entmischungs- oder Phasentrenntemperatur abgekühlt, so tritt zunächst eine flüssig-flüssig Entmischung bzw. Phasentrennung in zwei flüssige Phasen auf, nämlich in eine polymerreiche und eine polymerarme Phase. Bei weiterer Abkühlung bis unter die Erstarrungstemperatur erstarrt die polymerreiche Phase zur dreidimensionalen Membranstruktur. Im Rahmen der vorliegenden Erfindung liegt die Erstarrungstemperatur des Systems aus Polymerkomponente und Verbindungen A und B vorzugsweise oberhalb von 50°C und besonders bevorzugt oberhalb von 100°C. Ist die Abkühlgeschwindigkeit genügend groß, dass die flüssig-flüssig-Phasentrennung nicht unter thermodynamischen Gleichgewichtsbedingungen erfolgen kann sondern unter thermodynamischen Nichtgleichgewichtsbedingungen, jedoch andererseits dennoch relativ langsam, erfolgt die flüssig-flüssig-Phasentrennung etwa gleichzeitig mit der Ausbildung einer Vielzahl von Flüssigkeitströpfchen von im wesentlichen gleicher Größe. Das resultierende Polymergebilde weist dann eine schwammartige zellförmige und offenporige Mikrostruktur auf. Die verschiedenartige Ausbildung solcher schwammartiger mikroporöser Strukturen über Prozesse mit thermisch induzierter flüssig-flüssig-Phasentrennung werden eingehend in der DE-A 27 37 745 beschrieben, auf deren Offenbarung sich ausdrücklich bezogen wird, und z.B. in R.E. Kesting: "Synthetic Polymeric Membranes", John Wiley & Sons, 1985, S. 261-264, dargestellt.

Bei dem die erfindungsgemäße Hohlfasermembran aufbauenden bzw. im Verfahren zu dessen Herstellung eingesetzten membranbildenden Vinylidenfluorid-Polymer kann es sich um ein Vinylidenfluorid-Homopolymere oder ein Vinylidenfluorid-Copolymer handeln. Als Vinylidenfluorid-Copolymere kommen Copolymere von Vinylidenfluorid mit mindestens einem weiteren Bestandteil, ausgewählt aus der Gruppe der Vinylfluoride, Ethylentetrafluoride, Propylenhexafluoride, Ethylentrifluoride, Ethylentrifluorid-Chloride, Vinylfluorid und Ethylen in Frage. Vorzugsweise können Mischungen von zwei oder mehreren der Vinylidenfluorid-Homopolymere und/oder -Copolymere eingesetzt werden. Bevorzugt werden im Rahmen der vorliegenden Erfindung Vinylidenfluorid-Homopolymere eingesetzt.

Erfindungsgemäß weist die eingesetzte Polymerkomponente aus mindestens einem Vinylidenfluorid Homopolymer oder Copolymer ein über Gelpermeationschromatographie gemessenes mittleres Molekulargewicht $M_w$ im Bereich von 550.000 und 750.000 Dalton sowie eine Polydispersität von mindestens 3 auf. Im Falle der bevorzugten Verwendung von Mischungen von zwei oder mehreren Vinylidenfluorid-Homopolymer- und/oder - Copolymerkomponenten können diese vorzugsweise unterschiedliche mittlere Molekulargewichte aufweisen, so dass über die Mischung eine Einstellung des mittleren Gewichtsmittel des Molekulargewichts sowie der Polydispersität vorgenommen werden kann.

Wie ausgeführt, hat das eingesetzte Polyvinylidenfluorid und insbesondere dessen Molekulargewicht sowie dessen Polydipersität des Molekulargewichts maßgeblichen Einfluss auf die mechanischen Eigenschaften und die Leistungsdaten der Membran, aber auch auf die Porenstruktur, die sich bei der Herstellung der Hohlfasermembranen ausbildet. So wurde festgestellt, dass bei Verwendung einer Polyvinylidenfluorid-Polymerkomponente mit einem Gewichtsmittel des Molekulargewichts im Bereich von 550.000 bis 700.000 Dalton, jedoch einer Polydispersität unterhalb von 3 Membranen resultieren, bei denen die Poren eine geringere Interkonnektivität und eine erhöhte Tortuosität zeigen. Bevorzugt weist die eingesetzte Vinylidenfluorid-Polymerkomponente eine Polydispersität von größer 4 auf. Vorzugsweise beträgt die Polydispersität höchstens 7. Bei der Herstellung von Membranen aus einer Polyvinylidenfluoridkomponente mit einem Gewichtsmittel des Molekulargewichts im Bereich von 550.000 bis 700.000 Dalton, jedoch mit einer Polydispersität von größer als 7, ist beobachtet worden, dass für die dann vorhandenen sehr unterschiedlichen Molekülkettenlängen der Vinylidenfluorid-Polymermoleküle im vorliegenden Verfahren mit thermisch induzierter Phasenseparation eine stark unterschiedliche Ausfällkinetik und beispielsweise ein Ausfällen bei deutlich unterschiedlichen Temperaturen resultieren kann. Dies kann Einfluss auf die sich ausbildenden Membranstrukturen haben und dazu führen, dass die gewünschten Membranstrukturen nicht mehr erhalten werden.

Sofern erforderlich, können die Vinylidenfluorid-Homopolymere oder Vinylidenfluorid-Copolymere auch Additive wie z.B. Antioxidantien, UV-Absorber, Gleitmittel oder Nukleierungsmittel enthalten.

Die eingesetzten Zusammensetzungen aus der Polymerkomponente, der Verbindung A und der Verbindung B, wobei die Verbindungen A und B zusammen das Lösemittelsystem ausbilden, müssen gemeinsam in eine einzige homogene flüssige Phase überführbar sein und eine kritische Entmischungstemperatur aufweisen, unterhalb derer eine Phasentrennung in zwei flüssige Phasen auftritt. Diese liegt jedoch höher als die Entmischungstemperatur einer Lösung, die gleiche Anteile Polymer, jedoch als Lösemittelsystem nur die Verbindung A enthält. Bei Systemen Polymerkomponente/Verbindung A mit Mischungslücke im flüssigen Aggregatzustand wird also durch den Zusatz der Verbindung B die kritische Entmischungstemperatur heraufgesetzt. Durch Zugabe der Verbindung B wird eine gezielte Steuerung der Porengröße und des Porenvolumens der erhaltenen porösen Strukturen ermöglicht.

Als Verbindung A sind solche Verbindungen einzusetzen, die Lösemittel für die Polymerkomponente sind und in der diese Polymerkomponente bei Erwärmen bis höchstens zum Siedepunkt dieser Verbindung zu einer homogenen Lösung vollständig gelöst wird. Als Verbindung B wird erfindungsgemäß eine solche Verbindung ausgewählt, die ein Nichtlöser für die Polymerkomponente ist. Unter einem Nichtlöser für die Polymerkomponente wird dabei generell im Rahmen der vorliegenden Erfindung eine Verbindung verstanden, welche die Polymerkomponente in einer Konzentration von 1 Gew.-% in dem Nichtlöser beim Erwärmen bis höchstens zum Siedepunkt dieses Nichtlösers nicht zu einer homogenen Lösung auflöst.

Dabei kann die Verbindung A zusätzlich mit weiteren Lösern verschnitten sein. Auch die Verbindung B kann in Mischung mit weiteren Nichtlösern eingesetzt werden. Infolgedessen wird im Rahmen der vorliegenden Erfindung unter der Verbindung A nicht nur eine einzelne Verbindung verstanden, sondern auch eine Mischung verschiedener Löser, solange die Gesamtwirkung als Löser erhalten bleibt. Ebenso wird unter der Verbindung B auch eine Mischung verschiedener Nichtlöser verstanden, solange die Wirkung als Nichtlöser erhalten bleibt.

Als Verbindung A, d.h. als Löser für das mindestens eine Vinylidenfluorid Homopolymer oder Copolymer, werden Glycerintriacetat, Glycerindiacetat, 2-(2-Butoxyethoxy-)ethylacetat, Dibutylphtalat, Adipinsäurediethylester, Adipinsäuredibutylether, Butyldiglykolacetat, Butylglykolacetat, Glykoldiacetat, Propylencarbonat, Butyrolacton oder ε-Caprolactam oder Gemische aus den erwähnten Verbindungen eingesetzt. Besonders bevorzugt wird Glycerintriacetat oder eine Mischung aus Glycerintriacetat und ε-Caprolactam als Verbindung A eingesetzt. Als Verbindung B, d.h. als Nichtlöser für die Polymerkomponente, werden Dioctyladipat, Gylcerinmonoacetat, Glycerin, Glykol, Diglykol oder Rizinusöl oder Mischungen verwendet. Besonders bevorzugt ist die Verwendung von Dioctyladipat oder Rizinusöl oder Mischungen hiervon.

Der zur Membranherstellung erforderliche Anteil an Polymer sowie das Verhältnis von Verbindung A zu Verbindung B im Lösemittelsystem lässt sich durch Erstellung von Phasendiagrammen mittels einfacher Versuche ermitteln. Derartige Phasendiagramme können nach bekannten Methoden entwickelt werden, wie sie z.B. von C.A. Smolders, J.J. van Aartsen, A. Steenbergen, Kolloid-Z. und Z. Polymere, 243 (1971), S. 14-20, beschrieben werden. In der Regel ist bei einem vorgegebenen Löser A der Anteil an Verbindung B in der Mischung aus der Polymerkomponente, der Verbindung A und der Verbindung B abhängig von der Stärke des Nichtlösers, d.h. der Verbindung B. Erfindungsgemäß ist der Anteil der Verbindung B im Lösemittelsystem 30 bis 70 Gew.-%.

Erfindungsgemäß liegt die Konzentration des mindestens einen Vinylidenfluorid Homopolymeren oder Copolymeren in der homogenen Lösung bei 20-40 Gew.-% und die Konzentration des Lösemittelsystems bei 80-60 Gew.-%. In einer bevorzugten Ausgestaltung des erfindungsgemäßen Verfahrens beträgt der Anteil der Polymerkomponente 20-30 Gew.-% und der Anteil des Lösemittelsystems, bestehend aus den Verbindungen A und B, 80-70 Gew.-%. Gegebenenfalls können der Polymerkomponente, den Verbindungen A und B oder auch der Polymerlösung weitere Stoffe wie z.B. Antioxidantien, Keimbildungsmittel, Füllstoffe, Komponenten zur Verbesserung der Biokompatibilität, d.h. der Blutverträglichkeit bei Einsatz der Membran bei der Oxygenation, z.B. Vitamin E, und ähnliche als Additive zugegeben werden.

Zur Ausbildung der Hohlfasermembranen wird die Polymerlösung durch den Ringspalt einer Hohlfadendüse extrudiert und der Hohlfaden ausgebildet. Durch die zentrale Bohrung der Hohlfadendüse wird ein Fluid dosiert, das als Innenfüllung fungiert, mittels derer das Lumen des Hohlfadens bzw. der Hohlfasermembran ausgebildet und stabilisiert wird. Der extrudierte Hohlfaden bzw. die resultierende Hohlfasermembran weist dann eine dem Lumen zugewandte Oberfläche, die Innenoberfläche, und eine dem Lumen abgewandte, durch die Wand des Hohlfadens bzw. der Hohlfasermembran von der Innenoberfläche getrennte Oberfläche, die Außenoberfläche auf.

Als Innenfüllung kommen Flüssigkeiten wie z.B. Glycerin oder auch Gase wie z.B. Stickstoff oder Luft in Frage. Bevorzugt wird als Innenfüllung Stickstoff verwendet.

Die Hohlfaser wird nach ihrer Ausformung in der Hohlfaserdüse zur Abkühlung mit ihrer äußeren Oberfläche mit einem flüssigen Abkühlmedium in Kontakt gebracht, welches chemisch nicht mit der Polymerkomponente reagiert und welches einen Löser und einen Nichtlöser für die Polymerkomponente enthält. Dabei ist es zur Erzielung einer offenen äußeren Oberfläche, d.h. einer äußeren Oberfläche, die eine hohe Anzahl von Poren aufweist, von Vorteil, wenn sich das Abkühlmedium als solches gegenüber der Polymerkomponente bei der Werkzeugtemperatur als Löser verhält. Natürlich muss sich das Abkühlmedium bei der Abkühltemperatur wie ein Nichtlöser gegenüber der Polymerkomponente verhalten.

Vorzugsweise handelt es sich bei dem im Abkühlmedium enthaltenen Löser und/oder dem dort enthaltenen Nichtlöser um die Verbindung A bzw. um die Verbindung B, die auch zu Herstellung der homogenen Lösung aus Polymerkomponente und Lösemittelsystem eingesetzt werden. Hierdurch kann es zu einem für die Ausbildung der erfindungsgemäßen Membranstruktur und insbesondere für die Ausbildung der Struktur der äußeren Oberfläche der erfindungsgemäßen Membran besonders förderlichen Stoffaustausch zwischen dem aus der Hohlfadendüse extrudierten Hohlfaden und dem Abkühlmedium kommen. Besonders offene äußere Oberflächen werden erhalten, wenn die Konzentration der Verbindung A im Abkühlmedium höher ist als in der Spinnlösung. Natürlich muss weiterhin die Bedingung erfüllt sein, dass das Abkühlmedium bei der Abkühltemperatur gegenüber der Polymerkomponente als Nichtlöser wirkt.

Besonders vorteilhaft ist es, wenn die Verbindung B bzw. der im Abkühlmedium enthaltene Nichtlöser ein starker Nichtlöser für die Polymerkomponente ist, wobei hierbei als Bedingung für einen starken Nichtlöser gilt, dass die Entmischungstemperatur eines Systems, bestehend aus 30 Gew.-% der Polymerkomponente, 40 Gew.-% der als Löser eingesetzten Verbindung A und 30 Gew.-% der Verbindung B bzw. des im Abkühlmedium enthaltene Nichtlösers, um mindestens 25%, bezogen auf die Erstarrungstemperatur, über der Erstarrungstemperatur dieses Systems liegt. Zur Einleitung einer thermodynamischen Nichtgleichgewichts-flüssig-flüssig-Phasentrennung muss die Temperatur des Abkühlmediums deutlich unterhalb der kritischen Entmischungstemperatur oder Phasentrenntemperatur der verwendeten Polymerlösung und im weiteren zur Erstarrung der polymerreichen Phase unterhalb der Erstarrungstemperatur liegen. Vorzugsweise weist das Abkühlmedium eine Temperatur auf, die um mindestens 100°C unterhalb der Phasentrenntemperatur liegt, und besonders bevorzugt eine Temperatur, die um mindestens 150°C unterhalb der Phasentrenntemperatur liegt. Es ist von besonderem Vorteil, wenn dabei die Temperatur des Abkühlmediums kleiner als 50°C ist. In Einzelfällen kann eine Kühlung auf Temperaturen unterhalb der Raumtemperatur erforderlich sein.

Die Hohlfaser kann nach Austritt aus der Hohlfaserdüse zur Abkühlung durch einen Schacht oder ein Spinnrohr geführt werden, in dem sich das Abkühlmedium befindet. Hierbei werden das Abkühlmedium und die Hohlfaser in der Regel in die gleiche Richtung durch den Schacht bzw. das Spinnrohr geführt. Vorzugsweise durchlaufen Hohlfaser und Abkühlmedium den Schacht bzw. das Spinnrohr in die gleiche Richtung, wobei die mittlere lineare Geschwindigkeit des Abkühlmediums mindestens um 20% und besonders bevorzugt mindestens um 40% kleiner ist als die Abzugsgeschwindigkeit des ausgeformten Hohlfadens durch den Schacht bzw. das Spinnrohr. Hierbei wird unter der mittleren linearen Geschwindigkeit des Abkühlmediums der auf den Querschnitt des Schachts bzw. des Spinnrohrs bezogene Volumenstrom des Abkühlmediums durch den Schacht bzw. das Spinnrohr verstanden. Derartige Verfahrensvarianten werden beispielsweise in der DE-A-28 33 493 oder in der EP-A-133 882 beschrieben.

Nach Abkühlung und Verfestigung der Polymerstruktur und damit der Membranstruktur werden die Verbindungen A und B in der Regel aus dem Formkörper entfernt. Die Entfernung kann beispielsweise durch Extraktion erfolgen. Vorzugsweise werden dabei solche Extraktionsmittel eingesetzt, die das Polymer bzw. die Polymere nicht lösen, die jedoch mischbar mit den Verbindungen A und B sind. Anschließend kann eine Trocknung bei erhöhten Temperaturen erforderlich sein, um das Extraktionsmittel aus der Membran zu entfernen. Brauchbare Extraktionsmittel sind Aceton, Methanol, Ethanol und bevorzugt Isopropanol.

Die Erfindung soll anhand der nachfolgenden Beispiele und Figuren näher erläutert werden. Es zeigen:

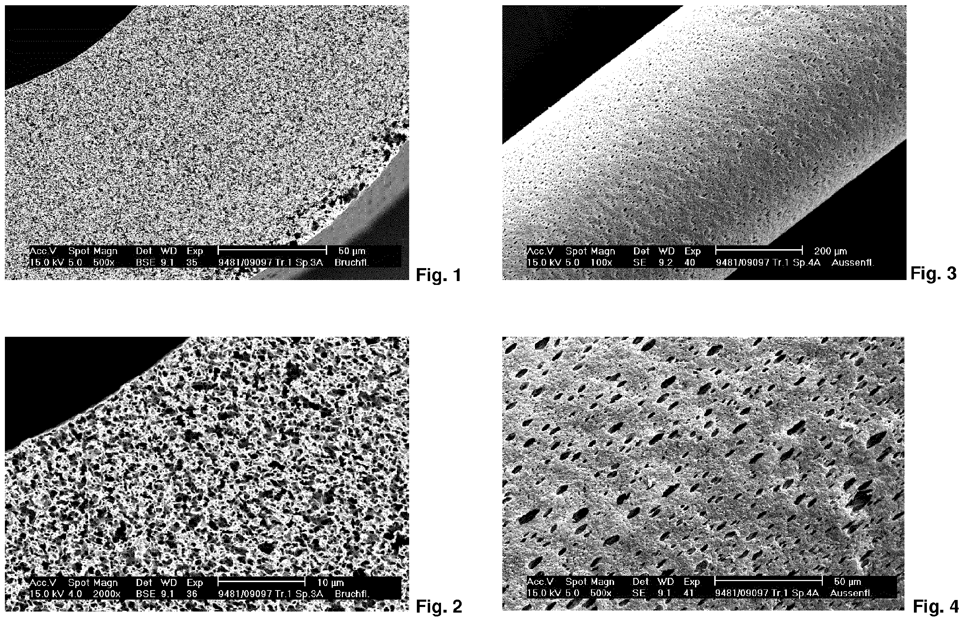

Fig. 1: Rasterelektronenmikroskopische (REM-) Aufnahme eines Querschnitts der Membran gemäß Beispiel 1 bei 500-facher Vergrößerung.

Fig. 2: REM-Aufnahme eines Ausschnitts des Querschnitts der Membran gemäß Beispiel 1 bei 2000-facher Vergrößerung.

Fig. 3: REM- Aufnahme der äußeren Oberfläche der Membran gemäß Beispiel 1 bei 100-facher Vergrößerung.

Fig. 4: REM- Aufnahme der äußeren Oberfläche der Membran gemäß Beispiel 1 bei 500-facher Vergrößerung.

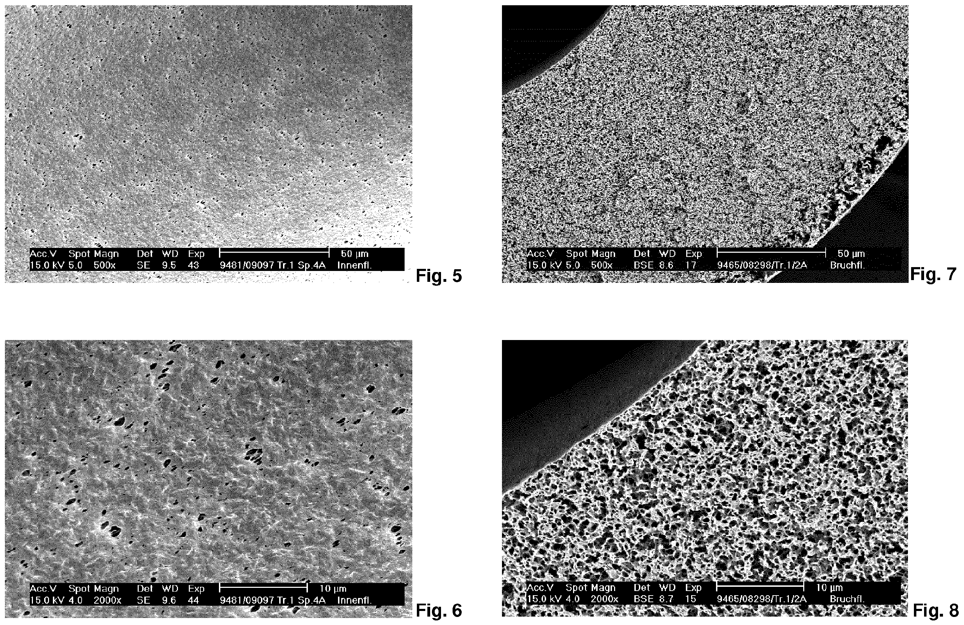

Fig. 5: REM- Aufnahme der inneren Oberfläche der Membran gemäß Beispiel 1 bei 500-facher Vergrößerung.

Fig. 6: REM- Aufnahme der Oberfläche der Membran gemäß Beispiel 1 bei 2000-facher Vergrößerung.

Fig. 7: REM-Aufnahme eines Querschnitts der Membran gemäß Beispiel 2 bei 500-facher Vergrößerung.

Fig. 8: REM-Aufnahme eines Ausschnitts des Querschnitts der Membran gemäß Beispiel 2 bei 2000-facher Vergrößerung.

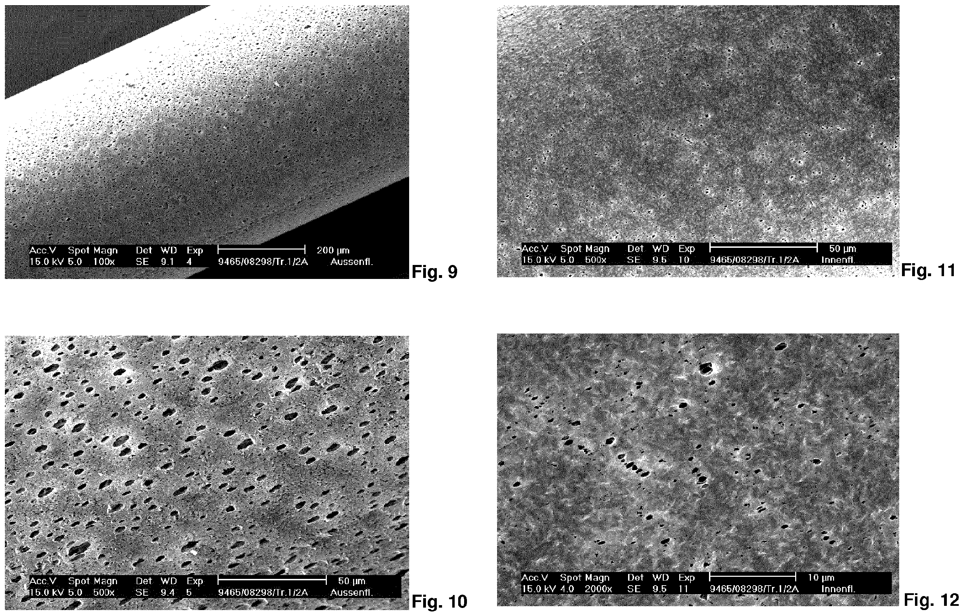

Fig. 9: REM- Aufnahme der äußeren Oberfläche der Membran gemäß Beispiel 2 bei 100-facher Vergrößerung.

Fig. 10: REM- Aufnahme der äußeren Oberfläche der Membran gemäß Beispiel 2 bei 500-facher Vergrößerung.

Fig. 11: REM- Aufnahme der inneren Oberfläche der Membran gemäß Beispiel 2 bei 500-facher Vergrößerung.

Fig. 12: REM- Aufnahme der inneren Oberfläche der Membran gemäß Beispiel 2 bei 2000-facher Vergrößerung.

Zur Ermittlung der Eigenschaften der erfindungsgemäßen Hohlfasermembran wurden die folgenden Methoden angewandt:

Maximale Trennpore:

Der Durchmesser der maximalen Trennpore wird mittels der Blaspunktmethode (ASTM Nr. 128-99 und F 316-03) bestimmt, wozu beispielsweise die in der DE-A-36 17 724 beschriebene Methode geeignet ist. Dabei ergibt sich $d_{max}$ aus dem zum Blaspunkt zugehörigen Gasraumdruck $P_B$ nach der Beziehung

$$d_{max} = \sigma_B / P_B$$

Hierbei ist $\sigma_B$ eine Konstante, die hauptsächlich von der bei der Messung eingesetzten benetzenden Flüssigkeit abhängig ist. Für IPA beträgt $\sigma_B$ bei 25°C 0,61 $\mu m \cdot bar$.

Transmembranfluss für Isopropylalkohol (Permeabilität IPA):

Aus den zu prüfenden Hohlfasermembranen wird eine Prüfzelle mit definierter Hohlfaserzahl und Länge gefertigt. Die Hohlfasern werden dafür beidseitig an ihren Enden in ein Polyurethanharz eingebettet. Nach dem Aushärten des Harzes werden die Einbettungen auf eine Länge von ca. 30 mm geschnitten, wobei die Lumina der Hohlfasermembranen durch den Schnitt geöffnet werden. Die Hohlfaserlumina in den Einbettungen müssen auf Durchgängigkeit überprüft werden. Die freie Länge der Hohlfasermembranen zwischen den Einbettungen beträgt üblicherweise 180 +/- 10 mm. Die Anzahl der Hohlfasemembranen ist so zu bemessen, dass unter Berücksichtigung der freien Länge und des Innendurchmessers der Hohlfasermembranen eine Filtrationsfläche von ca. 20 cm$^2$ in der Prüfzelle bereitgestellt wird.

Die Prüfzelle wird mit in eine Prüfapparatur eingebunden und mit auf 25°C temperiertem Isopropanol (IPA) reinst bei einem definierten Prüfdruck (ca. 0,2 bar) durchströmt. Die während einer Messzeit von 2 min erhaltene filtrierte IPA-Menge, d.h. das während der Messung erzeugte Permeat wird gravimetrisch oder volumetrisch erfasst. Vor Beginn der Messung muss die Anlage luftfrei gespült werden. Zur Bestimmung des TMF werden in der Prüfapparatur der Eingangs- und Ausgangsdruck an der Prüfzelle gemessen. Die Messung wird bei 25°C durchgeführt.

Der Transmembranfluss TMF wird nach der Formel (III)

$$TMF = \frac{V_W}{\Delta t \cdot A_M \cdot \Delta p} \quad \left[\frac{ml}{cm^2 \cdot min \cdot bar}\right] \quad\quad\quad (III)$$

ermittelt. Hierbei sind:

$V_W$ = durch die Membranprobe während der Messzeit hindurch geströmte IPA-Volumen [ml]
$\Delta t$ = Messzeit [min]
$A_M$ = durchströmte Fläche der Membranprobe (üblicherweise 20 cm$^2$)
$\Delta p$ = eingestellter Druck während der Messung [bar]

Transmembranfluss für Wasserdampf:

Die Messung des Transmembranflusses für Wasserdampf erfolgt an einem Hohlfasermembranmodul mit einer Prüffläche von 40 cm$^2$. An diesen Hohlfasermembranmodul sind zwei Flüssigkeitskreisläufe angeschlossen, wobei der Feedstrom (Salzwasserkreislauf) so mit dem Hohlfasermembranmodul verbunden ist, dass er die Hohlfasermembranen lumenseitig durchströmt. Der das Permeat aufnehmende Destillatkreislauf durchströmt den Hohlfasermembranmodul im extrakapillären Raum. Die Vorlagevolumina der Kreisläufe betrugen jeweils 1,6 l. Während der Messung nimmt der Destillatkreislauf infolge des aufgenommenen Permeats ständig zu. Der Salzwasserkreislauf weist einen Salzgehalt von 36±0,5 g/l auf, der durch Zudosieren von VE-Wasser über Leitfähigkeitsmessung konstant gehalten wird.

Der Volumenstrom wird in beiden Kreisläufen auf 200 l/h ±5% eingestellt, wobei im Gegenstrom gefahren wird. Der Destillatkreislauf wird auf eine Temperatur von 30°C und der Salzwasserkreislauf auf eine Temperatur von 80°C temperiert. Beide Kreisläufe werden auf gleichem Druckniveau gehalten, wobei jeweils am Eingang in den Hohlfasermembranmodul ein Druck von 500 mbar eingestellt wird.

Zur Bestimmung des Transmembranflusses für Wasserdampf wird die Gewichtszunahme im Destillatkreislauf gravimetrisch über der Zeit ermittelt. Die Messzeit beträgt dabei mindestens 15 min.

Der Transmembranfluss für Wasserdampf in l/(m$^2$·h) ergibt sich dann aus der Gewichtszunahme bzw. der sich daraus ergebenden Volumenzunahme pro Zeiteinheit, bezogen auf die aktuelle Membranfläche (Innenoberfläche) des eingesetzten Hohlfasermembranmoduls.

Bruchkraft und Bruchdehnung:

Die Messung der Bruchkraft der Hohlfasermembranen erfolgt mit einer üblichen Universalprüfmaschine der Fa. Zwick, Ulm.

Die Hohlfasermembranprobe wird mit konstanter Geschwindigkeit in Längsrichtung bis zum Bruch gedehnt. Die dafür benötigte Kraft wird in Abhängigkeit der Längenänderung gemessen und in einem Kraft-Dehnungsdiagramm festgehalten. Die Messung erfolgt als Mehrfachbestimmung an mehreren Hohlfasermembranproben bei 100 mm Einspannlänge und bei einer Zuggeschwindigkeit von 500 mm/min. Das Vorspanngewicht beträgt 2,5 cN. Die zum Bruch benötigte Kraft BK wird als gemittelter Zahlenwert in cN ausgegeben.

Die Bruchfestigkeit $\sigma_B$ der Hohlfasermembranprobe wird durch Normierung der Bruchkraft BK auf die Querschnittsfläche $A_Q$ der Membranwand erhalten.

Molekulargewicht, Polydispersität:

Die Bestimmung des Molekulargewichts und der Molmassenverteilung (Polydispersität) erfolgt mittels Gelpermeationschromatographie (GPC; Säulen: PSS GRAM: 10μm, G, 30, 100, 3000 Å) an Polystyrol-Standards mit N-Methyl-2-pyrrolidon (NMP)/ 0,1 M LiCl als Eluent und bei einer Flussrate von 1 ml/min. Die Probenkonzentration beträgt 3 mg/ml, das Injektionsvolumen 100 μl (Injektionssystem TSP AS 3000). Die Ofentemperatur wird auf 70°C eingestellt, die Detektion erfolgte mit dem Shodex Differentialrefraktiometer RI 71. Aus der Molmassenverteilung werden nach üblichen Methoden das Zahlenmittel $M_N$ und das Gewichtsmittel Mw der Molmassenverteilung bestimmt. Die Dispersität ergibt sich dann als Verhältnis des Gewichtsmittels Mw zum Zahlenmittel $M_N$, $M_W/M_N$.

Porengröße in den Oberflächen:

Die Bestimmung des mittleren Durchmessers der Poren in den Oberflächen erfolgt mit Hilfe bildanalytischer Verfahren anhand von rasterelektronenmikroskopischer Aufnahmen der Oberflächen mit einer 500-fachenVergrößerung (äußere Oberfläche) bzw. 2000-fachen Vergrößerung (innere Oberfläche). Diese rasterelektronenmikroskopischen Aufnahmen der Oberflächen wurden auch für die Beurteilung des Verhältnisses der Längserstreckung der Poren zu ihrer Quererstreckung zu Grunde gelegt.

Volumenporosität:

Proben von insgesamt mindestens 0,5 g der zu untersuchenden Membran werden trocken eingewogen. Im Falle von Hohlfasermembranen können dazu 5 Proben der Hohlfasermembran mit einer Länge von je ca. 20 cm eingesetzt werden. Die Membranproben werden mit einer das Membranmaterial benetzenden, jedoch nicht quellenden Flüssigkeit zunächst zweimal für 10 min benetzt, wobei für Hohlfasermembranen die Flüssigkeit zusätzlich mit Hilfe einer Spritze auch in das Lumen der Hohlfasermembranen eingespritzt wird. Für die vorliegenden PVDF-Membranen wird ein Silikonöl mit einer Viskosität von 200 mPa s bei 25 °C (Fa. Merck) eingesetzt. Anschließend werden die Proben in der Flüssigkeit für 24 Stunden eingelegt, so dass die Flüssigkeit in alle Poren eindringt. Dies lässt sich visuell daran erkennen, dass die Membranproben von einem opaken in einen glasigen, transparenten Zustand übergehen. Anschließend werden die Membranproben aus der Flüssigkeit entnommen. An den Membranproben anhaftende Flüssigkeit wird durch Zentrifugieren bei ca. 1800 g entfernt und vorsichtig mit einem schwachen Luftstrom aus dem Lumen der Hohlfasermembranen ausgeblasen. Danach wird die Masse der so vorbehandelten nassen, d.h. in den Poren flüssigkeitsgefüllten Membranproben durch Wägung bestimmt.

Die Volumenporosität ε wird nach folgender Formel bestimmt:

$$\text{Volumenporosität } \varepsilon \ = \ \frac{(m_{nass} - m_{trocken})/\rho_{Flüss.}}{(m_{nass} - m_{trocken})/\rho_{Flüss.} + m_{trocken}/\rho_{Polymer}}$$

wobei bedeuten:

$m_{trocken}$ = Gewicht der trockenen Membranprobe nach Benetzung und Trocknung [g]
mnass = Gewicht der nassen, flüssigkeitsgefüllten Membranprobe [g]
$\rho_{Flüss.}$ = Dichte der verwendeten Flüssigkeit [g/cm$^3$]
$\rho_{polymer}$ = Dichte des Membranpolymers [g/cm$^3$]

Mittlerer Porenradius (rp)

Die Bestimmung des mittleren Porenradius der Membranen erfolgt mit Hilfe der üblicherweise für Membranen mit mikroporöser Struktur eingesetzten Permporometrie, wie in der ASTM F 316-03 beschrieben. Hierzu werden die Poren einer porösen Membranprobe zuerst mit einer Flüssigkeit bekannter Grenzflächenspannung gefüllt. Anschließend wird die Membranprobe an ihrer einen Seite mit einem Gas beaufschlagt, dessen Druck stufenweise erhöht wird. Mit zunehmendem Druck wird die Flüssigkeit aus den Poren verdrängt, bis das Gas oberhalb des Öffnungsdrucks durch die Poren der Membranprobe zu fließen beginnt. Der Öffnungsdruck P für eine Pore mit bestimmter Größe hängt nach der Laplace-Gleichung von der Oberflächenspannung der Flüssigkeit und vom Porenradius ab:

$$P = \frac{2 \cdot \gamma \cdot \cos\theta}{r_p} \ ,$$

mit

$\gamma$ = Oberflächenspannung der benetzenden Flüssigkeit
$\theta$ = Kontaktwinkel der Flüssigkeit
$r_p$ = Porenradius

Bei der Messung wird zunächst der Gasfluss durch eine benetzte Probe in Abhängigkeit vom angewandten Messdruck kontinuierlich gemessen. Durch die stufenweise Erhöhung des Gasdruckes öffnet sich zuerst die größte Pore und danach die kleineren Poren, bis alle Poren in der Probe trocken sind. Der Gesamtgasstrom wird dabei kontinuierlich ermittelt. Auf diese Weise wird die Feuchtkurve erhalten. Anschließend wird die Messung bei der trocknen Probe wiederholt, um so als Referenzkurve die Trockenkurve, zu erhalten. Durch Vergleichen der Gasflusswerte der Feucht- und Trockenkurve wird die Porengrößenverteilungskurve ermittelt.

Der mittlere Porenradius wird aus den Versuchsreihen für die Durchströmungsmessungen bestimmt, die mit Hilfe eines Permporometers ("Capillary Flow Porometer", Fa. PMI, Porous Materials Inc.) durchgeführt werden. Als Benetzungsreagenz dient ein Fluorkohlenwasserstoff (Porewick®), der eine Oberflächenspannung von 16 mN/m aufweist. Es werden 6 jeweils 20 cm lange Hohlfasermembranproben mit ihren Enden in Bohrungen einer Halterung luftdicht so eingeklebt, dass die Lumina der Hohlfaserproben offenbleiben und von Gas durchströmt werden können. Nach Aushärten des Klebers werden die Hohlfasern am Austritt aus der Halterung bündig geschnitten. Die freie Messlänge der Probenstücke beträgt jeweils 3 cm. Die so vorbereiteten Proben werden mit der Halterung in die Probenkammer des Permporometers eingebaut.

Die Ermittlung des mittleren Porenradius rp erfolgt nach der in der ASTM F 316-03 angegebenen Vorgehensweise.

Tortuosität:

Die Tortuosität der porösen Kapillarmembranen wird über die Gaspermeabilitätsmethode nach M. Khayet et al., Polymer, 2002, 43, 3879-3890, Elsevier, bestimmt.

Die Gasflüsse für die porösen Membranen können durch das Porenfluss-Modell beschrieben werden. Unter Berücksichtigung von Beiträgen der Diffusion und der Konvektion wird die Permeabilität (B) für eine poröse Membran in Abhängigkeit vom Messdruck, wie in der folgenden Formel (1) dargestellt, ermittelt:

$$B = \frac{3}{4}\left(\frac{2}{\pi MRT}\right)^{0.5} \cdot \frac{r_p \varepsilon}{L_p} \ + \ \frac{P_m}{8\mu RT} \cdot \frac{r_p^2 \varepsilon}{L_p} \ = \ I_0 + S_0 \cdot P_m \qquad (1)$$

mit

B = Permeabilität des Messgases durch die Membran in mol/(s·m²·Pa)
M = Molgewicht des Messgases in (kg/mol)
R = Gaskonstante = 8.314 J/(mol·K)
T = Absolute Temperatur in (K)
$r_p$ = Porenradius der Membran in (m)
$\varepsilon$ = Porosität der Membran in Anteilen
$L_p$ = effektive Porenlänge der Membran in (m)
$P_m$ = mittlerer Messdruck in den Membranporen in (Pa)
$\mu$ = dynamische Viskosität des Messgases in (Pa·s)
$\varepsilon/L_p$ = effektive Porosität der Membran in (m$^{-1}$)

Wird die gemessene Gaspermeabilität B bei verschiedenen Transmembrandrücken gegen die Messdrücke $P_m$ aufgetragen, ergibt sich eine lineare Korrelation. Die Steigung $S_0$ und der Achsenabschnitt $I_0$ auf der B-Achse können aus der Auftragung berechnet werden. Daraufhin kann die effektive Porosität $\varepsilon/L_p$ entsprechend der folgenden Formel dargestellt werden:

EP 3 003 538 B1

$$\frac{\varepsilon}{L_p} = \frac{8\mu RT}{r_p^2} \cdot S_0 \qquad\qquad (2)$$

Die Messung der Gaspermeabilität erfolgt wie unter der zuvor beschriebenen Messmethode zu Porengrößenverteilung und mittlerem Porenradius dargestellt und wird an trockenen Membranproben mittels eines Permporometers ("Capillary Flow Porometer", Fa. PMI, realisiert. Die Membranproben werden in die dafür vorgesehenen Halterungen eingefügt. Die Permeabilitätsflüsse von Stickstoff durch die trockenen Membranproben werden bei verschiedenen Transmembrandrücken bei Raumtemperatur gemessen. Bei Hohlfasermembranen erfolgt die Beaufschlagung mit Stickstoff an der Lumenseite.

Mit der wie zuvor beschrieben für die Membranproben ermittelten Porosität $\varepsilon$ und dem über der zuvor beschriebenen Permporometrie ermittelten mittleren Porenradius rp lässt sich die effektive Porosität $\varepsilon/L_P$ errechnen. Für die dynamische Viskosität $\mu$ des Messgases Stickstoff wird dabei ein Wert von 17,84 Pa·s zu Grunde gelegt.

Die Tortuosität $\tau$ lässt sich dann zu $\tau = L_P / L_{min}$ berechnen, wobei in die Berechnung die Dicke der Membran, die der minimalen Porenlänge $L_{min}$ entspricht, eingeht.


**Patentansprüche**

1. Hydrophobe Hohlfasermembran für die Membrandestillation aus einem Vinylidenfluorid-Polymer, wobei die Hohlfasermembran eine Wand mit einer Wanddicke, eine äußere Oberfläche an ihrer Außenseite und eine innere Oberfläche an ihrer ihrem Lumen zugewandten Innenseite aufweist,

   - wobei die Hohlfasermembran an ihrer inneren und an ihrer äußeren Oberfläche eine durchgehende Haut aufweist,
   - wobei in der Haut der inneren Oberfläche sowie in der Haut der äußeren Oberfläche Poren ausgebildet sind und
   - wobei die Hohlfasermembran, angrenzend an die Haut an der inneren Oberfläche, eine Stützschicht mit mikroporöser, schwammartiger und offenporiger Struktur und mit über der Wanddicke im wesentlichen isotroper Porenstruktur besitzt, die sich über mindestens 80 % der Wanddicke erstreckt und Poren mit einem mittleren Durchmesser von weniger als 1 $\mu$m aufweist wobei die Porengrößen durch Rasterelektronenmikroskopie bestimmt werden,

   **dadurch gekennzeichnet,**

   - **dass** das die Struktur der Hohlfasermembran aufbauende Vinylidenfluorid-Polymer ein Gewichtsmittel des Molekulargewichts Mw, bestimmt wie im Experimentalteil der Beschreibung, im Bereich von 550.000 bis 700.000 Dalton und eine durch das Verhältnis aus dem Gewichtsmittel Mw und dem Zahlenmittel $M_N$ des Molekulargewichts gegebene Polydispersität, bestimmt wie im Experimentalteil der Beschreibung, von größer 3,0 aufweist,
   - **dass** die Poren in der Haut der äußeren Oberfläche und die Poren in der Haut der inneren Oberfläche einen geschlossenen Umfang in der Ebene der Haut aufweisen und die Poren in der Haut der äußeren bzw. der inneren Oberfläche ein Verhältnis ihrer Längserstreckung in Richtung der Längsachse der Hohlfasermembran zu ihrer Quererstreckung in Umfangsrichtung der Hohlfasermembran von höchstens 10 aufweisen und die Poren in der inneren Haut der inneren Oberfläche einen Durchmesser von höchstens 3 $\mu$m aufweisen,
   - **dass** die Poren in der inneren Oberfläche kleiner als die Poren in der äußeren Oberfläche sind und die Poren im isotropen Bereich der Stützschicht weisen einen kleineren mittleren Durchmesser aufweisen als die Poren in der Haut der äußeren Oberfläche,
   - **dass** dei.Porosität der Hohlfasermembran, bestimmt wie im Experimentalteil der Beschreibung, im Bereich von 50 bis 90 Vol % - die Wanddicke im Bereich von 50 bis 300 $\mu$m und der Durchmesser des Lumens im Bereich von 100 bis 500 $\mu$m liegt und
   - **dass** die Hohlfasermembran einen nach der Blaspunktmethode ermittelten maximalen Trennporendurchmesser $d_{max}$ im Bereich von 0,3 bis 0,7 $\mu$m aufweist.

2. Hohlfasermembran nach Anspruch 1, **dadurch gekennzeichnet, dass** sie einen Transmembranfluss für Isopropanol, bestimmt wie im Experimentalteil der Beschreibung, im Bereich von 2 bis 8 ml/(cm$^2$·min·bar) aufweist.

3. Hohlfasermembran nach Anspruch 1 oder 2, **dadurch gekennzeichnet, dass** sie einen Transmembranfluss für Wasserdampf von mindestens 35 l/(m$^2$·h) aufweisen, ermittelt an einem Membranmodul der Hohlfasermembran mit einer Membranfläche von 40 cm$^2$ bei einer Temperatur des Salzwasserkreislaufs von 80°C und des Destillatkreislaufs von 30°C, einen Volumenstrom in den Kreisläufen von 200 l/h, einem Druckniveau in den Kreisläufen von 500 mbar am Eingang in den Hohlfasermembranmodul und einer Salzkonzentration im Salzkreislauf von 36 g/l.

4. Hohlfasermembran nach einem oder mehreren der Ansprüche 1 bis 3, **dadurch gekennzeichnet, dass** sie eine Bruchdehnung, bestimmt wie im Experimentalteil der Beschreibung, von mindestens 50 % aufweist.

5. Hohlfasermembran nach einem oder mehreren der Ansprüche 1 bis 4, **dadurch gekennzeichnet, dass** sie eine Bruchfestigkeit, bestimmt wie im Experimentalteil der Beschreibung, von mindestens 400 cN/mm$^2$ aufweist.

6. Hohlfasermembran nach einem oder mehreren der Ansprüche 1 bis 5, **dadurch gekennzeichnet, dass** sie eine Volumenporosität, bestimmt wie im Experimentalteil der Beschreibung, im Bereich von 70 bis 85 Vol.-% aufweist.

7. Hohlfasermembran nach einem oder mehreren der Ansprüche 1 bis 6, **dadurch gekennzeichnet, dass** sie eine Porentortuosität, bestimmt wie im Experimentalteil der Beschreibung, von höchstens 1,5 aufweist.

8. Verfahren zur Herstellung einer hydrophoben Hohlfasermembran aus einem Vinylidenfluorid Homopolymer oder Copolymer nach einem oder mehreren der Ansprüche 1 bis 7, wobei das Verfahren mindestens die folgenden Schritte umfasst:

   a) Herstellung einer homogenen Spinnlösung von 20-40 Gew.-% einer Polymerkomponente aus mindestens einem Vinylidenfluorid-Polymer, in 80-60 Gew.-% eines Lösemittelsystems, wobei die Spinnlösung aus Polymerkomponente und Lösemittelsystem bei Abkühlung eine kritische Entmischungstemperatur und eine Erstarrungstemperatur aufweist und unterhalb der kritischen Entmischungstemperatur im flüssigen Aggregatzustand eine Mischungslücke und wobei das Lösemittelsystem eine Verbindung A und eine Verbindung B enthält, welche bei der Lösetemperatur flüssig und homogen miteinander mischbar sind, und wobei als Verbindung A ein Löser für die Polymerkomponente ausgewählt wird und die Verbindung B ein Nichtlöser für die Polymerkomponente ist,
   b) Ausformen der Spinnlösung zu einer Hohlfaser mit einer äußeren Oberfläche an seiner Außenseite und einer inneren Oberfläche an seiner Innenseite in einer Hohlfaserdüse, welche eine Werkzeugtemperatur oberhalb der kritischen Entmischungstemperatur aufweist,
   c) Abkühlung der Hohlfaser mittels eines Abkühlmediums, welches auf eine Abkühltemperatur unterhalb der Erstarrungstemperatur temperiert ist, mit einer solchen Geschwindigkeit, dass eine thermodynamische Nichtgleichgewichts-flüssig-flüssig-Phasentrennung in eine polymerreiche und eine polymerarme Phase und anschließend bei Unterschreiten der Erstarrungstemperatur Erstarrung der polymerreichen Phase erfolgt,
   d) gegebenenfalls Entfernen des Lösemittelsystems aus der Hohlfaser,

   wobei das Verfahren **dadurch gekennzeichnet ist,**

   **dass** die Polymerkomponente ein Gewichtsmittel des Molekulargewichts Mw, bestimmt wie im Experimentalteil der Beschreibung, im Bereich von 550.000 bis 700.000 Dalton und eine durch das Verhältnis aus dem Gewichtsmittel Mw und dem Zahlenmittel $M_N$ des Molekulargewichts gegebene Polydispersität, bestimmt wie im Experimentalteil der Beschreibung, von größer 3,0 aufweist, und
   **dass** die Hohlfaser zur Abkühlung mit ihrer äußeren Oberfläche mit einem flüssigen Abkühlmedium in Kontakt gebracht wird, welches chemisch nicht mit der Polymerkomponente reagiert und welches einen Löser und einen Nichtlöser für die Polymerkomponente enthält;
   **dass** der Anteil der Verbindung B im Lösemittelsystem 30 bis 70 Gew.-% beträgt;
   **dass** als Verbindung A, Glycerintriacetat, Glycerind iacetat, 2-(2-Butoxyethoxy-)ethylacetat, Dibutylphtalat, Adipinsäurediethylester, Adipinsäuredibutylether, Butyldiglykolacetat, Butylglykolacetat, Glykoldiacetat, Propylencarbonat, Butyrolacton oder ε-Caprolactam oder Gemische aus diesen Verbindungen eingesetzt wird; und
   **dass** als Verbindung B Dioctyladipat, Glycerinmonoacetat, Glycerin, Glykol, Diglykol oder Rizinusöl oder Mischungen hiervon eingesetzt wird.

9. Verfahren zur Herstellung einer hydrophoben Hohlfasermembran nach Anspruch 8, **dadurch gekennzeichnet, dass** sich das Abkühlmedium gegenüber der Polymerkomponente bei der Werkzeugtemperatur als Löser verhält.

10. Verfahren zur Herstellung einer hydrophoben Hohlfasermembran nach Anspruch 8 oder Anspruch 9, **dadurch gekennzeichnet, dass** es sich bei dem im Abkühlmedium enthaltenen Löser und/oder dem dort enthaltene Nichtlöser um die Verbindung A bzw. die Verbindung B handelt, die auch zu Herstellung der homogenen Lösung aus Polymerkomponente
und Lösemittelsystem eingesetzt werden.

**11.** Verfahren zur Herstellung einer hydrophoben Hohlfasermembran nach einem oder mehreren der Ansprüche 8 bis 10, **dadurch gekennzeichnet, dass** die Konzentration der Verbindung A im Abkühlmedium höher ist als in der Spinnlösung.

**Claims**

**1.** A hydrophobic hollow fiber membrane for membrane distillation, made up of a vinylidene fluoride polymer, wherein the hollow fiber membrane has a wall with a wall thickness, an outer surface on its outside, and an inner surface on its inside facing toward its lumen,

- wherein the hollow fiber membrane has a continuous skin on its inner and outer surface,
- wherein pores are formed in the skin of the inner surface and in the skin of the outer surface, and
- wherein the hollow fiber membrane, adjacent to the skin on the inner surface, has a supporting layer having a microporous, sponge-like, and open-pored structure and having a substantially isotropic pore structure across the wall thickness, said supporting layer extending across at least 80% of the wall thickness and having pores with an average diameter of less than 1 $\mu$m, wherein the pore sizes are determined via scanning electron microscopy,

**characterized in that**

- the vinylidene fluoride polymer forming the structure of the hollow fiber membrane has a weight average of the molecular weight Mw, determined as in the experimental section of the description, in a range of from 550,000 to 700,000 daltons, and a polydispersity, given by the ratio of the weight average Mw and the numerical average $M_N$ of the molecular weight of greater than 3.0, determined as in the experimental section of the description,
- the pores in the skin of the outer surface and the pores in the skin of the inner surface have a closed circumference in the plane of the skin, and the pores in the skin of the outer or inner surface have a ratio of their longitudinal extent in the direction of the longitudinal axis of the hollow fiber membrane to their transverse extent in the circumferential direction of the hollow fiber membrane of at most 10, and the pores in the inner skin of the inner surface have a diameter of at most 3 $\mu$m,
- the pores in the inner surface are smaller than the pores in the outer surface, and the pores in the isotropic region of the supporting layer have a smaller average diameter than the pores in the skin of the outer surface,
- the porosity of the hollow fiber membrane, determined as in the experimental section of the description, is in a range of from 50 to 90 vol%,
- the wall thickness is in a range of from 50 to 300 $\mu$m, and the diameter of the lumen is in a range of from 100 to 500 $\mu$m, and
- the hollow fiber membrane has a maximum separating pore diameter $d_{max}$, determined by the bubble point method, in a range of from 0.3 to 0.7 $\mu$m.

**2.** The hollow fiber membrane according to claim 1, **characterized in that** it has a transmembrane flow for isopropanol, determined as in the experimental section of the description, in a range of from 2 to 8 ml/(cm²·min·bar).

**3.** The hollow fiber membrane according to claim 1 or 2, **characterized in that** it has a transmembrane flow for water vapor of at least 35 l/(m²·h), determined in a membrane module of the hollow fiber membrane having a membrane area of 40 cm², at a temperature of the salt water circuit of 80°C and of the distillate circuit of 30°C, a volumetric flow rate in the circuits of 200 l/h, a pressure level in the circuits of 500 mbar at the inlet into the hollow fiber membrane module, and a salt concentration in the salt circuit of 36 g/l.

**4.** The hollow fiber membrane according to one or more of claims 1 to 3, **characterized in that** it has an elongation at break, determined as in the experimental section of the description, of at least 50%.

**5.** The hollow fiber membrane according to one or more of claims 1 to 4, **characterized in that** it has a breaking strength, determined as in the experimental section of the description, of at least 400 cN/mm².

**6.** The hollow fiber membrane according to one or more of claims 1 to 5, **characterized in that** it has a volume porosity, determined as in the experimental section of the description, in a range of from 70 to 85 vol%.

**7.** The hollow fiber membrane according to one or more of claims 1 to 6, **characterized in that** it has a pore tortuosity, determined as in the experimental section of the description, of at most 1.5.

**8.** A method for producing a hydrophobic hollow fiber membrane from a vinylidene fluoride homopolymer or copolymer according to one or more of claims 1 to 7, wherein the method includes at least the following steps:

a) preparing a homogeneous spinning solution of 20-40 wt% of a polymer component made from at least one vinylidene fluoride polymer, in 80-60 wt% of a solvent system, wherein the spinning solution made up of polymer component and solvent system has, on cooling, a critical segregation temperature and a solidification temperature, and has a miscibility gap below the critical segregation temperature in the liquid aggregate state; and wherein the solvent system contains a compound A and a compound B which are liquid and can be mixed homogeneously with each other at the dissolving temperature; and wherein a solvent for the polymer component is selected as compound A and compound B is a non-solvent for the polymer component,
b) shaping the spinning solution into a hollow fiber, with an outer surface on its outside and an inner surface on its inside, in a hollow fiber extruder die which has a tool temperature above the critical segregation temperature,
c) cooling the hollow fiber by means of a cooling medium, which is tempered to a cooling temperature below the solidification temperature, at such a rate that a thermodynamic non-equilibrium liquid-liquid phase separation into a polymer-rich and a polymer-poor phase takes place, and subsequently, on falling below the solidification temperature, solidification of the polymer-rich phase takes place,
d) optionally removing the solvent system from the hollow fiber,

wherein the method is **characterized in that**

the polymer component has a weight average of the molecular weight $M_W$, determined as in the experimental section of the description, in a range of from 550,000 to 700,000 daltons and a polydispersity, given by the ratio of the weight average $M_W$ and the numerical average $M_N$ of the molecular weight, determined as in the experimental section of the description, of greater than 3.0, and for cooling, the outer surface of the hollow fiber is brought into contact with a liquid cooling medium which does not chemically react with the polymer component and which contains a solvent and a non-solvent for the polymer component;
the proportion of compound B in the solvent system is from 30 to 70 wt%;
glyceryl triacetate, glyceryl diacetate, 2-(2-butoxyethoxy)ethyl acetate, dibutyl phthalate, adipic acid diethyl ester, adipic acid dibutyl ether, butyl diglycol acetate, butyl glycol acetate, glycol diacetate, propylene carbonate, butyrolactone, or $\varepsilon$-caprolactam, or mixtures of these compounds, is used as compound A; and **in that** dioctyl adipate, glyceryl monoacetate, glycerol, glycol, diglycol, or castor oil, or mixtures thereof, is used as compound B.

**9.** The method for producing a hydrophobic hollow fiber membrane according to claim 8, **characterized in that** the cooling medium behaves as a solvent with respect to the polymer component at the tool temperature.

**10.** The method for producing a hydrophobic hollow fiber membrane according to claim 8 or claim 9, **characterized in that** the solvent contained in the cooling medium and/or the non-solvent contained therein are compound A or compound B, which are also used for producing the homogeneous solution of polymer component and solvent system.

**11.** The method for producing a hydrophobic hollow fiber membrane according to one or more of claims 8 to 10, **characterized in that** the concentration of compound A is higher in the cooling medium than in the spinning solution.

**Revendications**

**1.** Membrane hydrophobe à fibres creuses pour la distillation sur membrane constituée par un polymère de fluorure de vinylidène, la membrane à fibres creuses présentant une paroi présentant une épaisseur de paroi, une surface extérieure sur son côté extérieur et une surface intérieure sur son côté intérieur faisant face à sa lumière,

- la membrane à fibres creuses présentant une peau continue sur sa surface intérieure et sur sa surface extérieure,

- où, dans la peau de la surface intérieure et dans la peau de la surface extérieure, des pores sont formés et
- la membrane à fibres creuses, adjacente à la peau sur la surface intérieure, présentant une couche de support à structure microporeuse, spongieuse et à pores ouverts et présentant, sur l'épaisseur de paroi, une structure poreuse essentiellement isotrope, laquelle s'étend sur au moins 80 % de l'épaisseur de paroi et présente des pores présentant un diamètre moyen inférieur à 1 $\mu$m, les dimensions de pores étant déterminées par microscopie électronique par balayage, **caractérisée en ce que**
- le polymère de fluorure de vinylidène constituant la structure de la membrane à fibres creuses présente une masse moléculaire moyenne en poids Mw, déterminée comme dans la partie expérimentale de la description, dans la plage de 550.000 à 700.000 daltons et une polydispersité donnée par le rapport de la moyenne en poids Mw et de la moyenne en nombre $M_N$ de la masse moléculaire, déterminée comme dans la partie expérimentale de la description, supérieure à 3,0,
- les pores de la peau de la surface extérieure et les pores de la peau de la surface intérieure présentent une circonférence fermée dans le plan de la peau et les pores de la peau de la surface extérieure ou de la surface intérieure présentent un rapport de leur extension longitudinale dans la direction de l'axe longitudinal de la membrane à fibres creuses et de leur étendue transversale dans la direction circonférentielle de la membrane à fibres creuses d'au plus 10 et les pores de la peau intérieure de la surface intérieure présentent un diamètre d'au plus 3 $\mu$m,
- les pores de la surface intérieure sont plus petits que les pores de la surface extérieure et les pores de la zone isotrope de la couche de support présentent un diamètre moyen inférieur au diamètre des pores de la peau de la surface extérieure,
- la porosité de la membrane à fibres creuses, déterminée comme dans la partie expérimentale de la description, est située dans la plage de 50 à 90 % en volume, l'épaisseur de paroi est située dans la plage de 50 à 300 $\mu$m et le diamètre de la lumière est situé dans la plage de 100 à 500 $\mu$m, et
- la membrane à fibres creuses présente un diamètre maximal de pores séparateurs $d_{max}$, déterminé selon le procédé de point de bulle, dans la plage de 0,3 à 0,7 $\mu$m.

2. Membrane à fibres creuses selon la revendication 1, **caractérisée en ce qu'**elle présente un débit transmembranaire pour l'isopropanol, déterminé comme dans la partie expérimentale de la description, dans la plage de 2 à 8 ml/(cm$^2$·min·bar).

3. Membrane à fibres creuses selon la revendication 1 ou 2, **caractérisée en ce qu'**elle présente un débit transmembranaire pour la vapeur d'eau d'au moins 35 l/(m$^2$.h), déterminé sur un module membranaire de la membrane à fibres creuses d'une surface de membrane de 40 cm$^2$ à une température du circuit d'eau salée de 80 °C et du circuit de distillat de 30 °C, un débit volumique dans les circuits de 200 l/h, un niveau de pression dans les circuits de 500 mbars à l'entrée du module de membrane à fibres creuses et une concentration en sel dans le circuit de sel de 36 g/l.

4. Membrane à fibres creuses selon l'une ou plusieurs des revendications 1 à 3, **caractérisée en ce qu'**elle présente un allongement à la rupture, déterminé comme dans la partie expérimentale de la description, d'au moins 50 %.

5. Membrane à fibres creuses selon l'une ou plusieurs des revendications 1 à 4, **caractérisée en ce qu'**elle présente une résistance à la rupture, déterminée comme dans la partie expérimentale de la description, d'au moins 400 cN/mm$^2$.

6. Membrane à fibres creuses selon l'une ou plusieurs des revendications 1 à 5, **caractérisée en ce qu'**elle présente une porosité volumique, déterminée comme dans la partie expérimentale de la description, dans la plage de 70 à 85 % en volume.

7. Membrane à fibres creuses selon l'une ou plusieurs des revendications 1 à 6, **caractérisée en ce qu'**elle présente une tortuosité des pores, déterminée comme dans la partie expérimentale de la description, d'au plus 1,5.

8. Procédé de production d'une membrane hydrophobe à fibres creuses constituée par un homopolymère ou copolymère de fluorure de vinylidène selon l'une ou plusieurs des revendications 1 à 7, ledit procédé comprenant au moins les étapes suivantes :

   a) la production d'une solution de filage homogène de 20-40 % en poids d'un composant polymère constitué par au moins un polymère de fluorure de vinylidène, dans 80-60 % en poids d'un système solvant, la solution de filage du composant polymère et du système solvant, lorsqu'elle est refroidie, présentant une température de séparation critique et une température de solidification et, en dessous de la température de séparation critique à l'état d'agrégation liquide, une lacune de miscibilité et le système solvant contenant un composé A et un composé B, lesquels, à la température de dissolution, sont liquides et miscibles de manière homogène l'un avec l'autre, et un solvant pour le composant polymère étant choisi comme composé A et le composé B étant un non-solvant pour le composant polymère,

b) le formage de la solution de filage en une fibre creuse présentant une surface extérieure sur sa face extérieure et une surface intérieure sur sa face intérieure dans une buse à fibre creuse, laquelle présente une température d'outil supérieure à la température critique de séparation,

c) le refroidissement de la fibre creuse au moyen d'un milieu de refroidissement, lequel est régulé à une température de refroidissement inférieure à la température de solidification, à une telle vitesse qu'une séparation thermodynamique de phase liquide-liquide hors équilibre en une phase riche en polymère et en une phase pauvre en polymère et ensuite, lors du passage sous la température de solidification, une solidification de la phase riche en polymère se produisent,

d) l'élimination, éventuellement, du système solvant de la fibre creuse, ledit procédé étant **caractérisé en ce que**

le composant polymère présente une moyenne en poids du poids moléculaire Mw, déterminée comme dans la partie expérimentale de la description, dans la plage de 550.000 à 700.000 daltons et une polydispersité donnée par le rapport de la moyenne en poids Mw et de la moyenne en nombre $M_N$ du poids moléculaire, déterminée comme dans la partie expérimentale de la description, supérieure à 3,0, et

la fibre creuse, pour le refroidissement, est mise en contact par sa surface extérieure avec un milieu de refroidissement liquide, lequel n'entre pas en réaction chimique avec le composant polymère et lequel contient un solvant et un non-solvant pour le composant polymère ;

la proportion de composé B dans le système solvant est située dans la plage de 30 à 70 % en poids ;

comme composé A, le triacétate de glycérol, le diacétate de glycérol, l'acétate de 2-(2-butoxyéthoxy)éthyle, le phtalate de dibutyle, l'ester diéthylique de l'acide adipique, le dibutyléther d'acide adipique, l'acétate de butyldiglycol, l'acétate de butylglycol, le diacétate de glycol, le carbonate de propylène, la butyrolactone ou l'ε-caprolactame ou les mélanges desdits composés sont utilisés ; et, comme composé B, l'adipate de dioctyle, le monoacétate de glycérol, le glycérol, le glycol, le diglycol ou l'huile de ricin ou les mélanges de ceux-ci sont utilisés.

9. Procédé de production d'une membrane hydrophobe à fibres creuses selon la revendication 8, **caractérisé en ce que** le milieu de refroidissement se comporte, par rapport au composant polymère, à la température d'outil, comme un solvant.

10. Procédé de production d'une membrane hydrophobe à fibres creuses selon la revendication 8 ou selon la revendication 9, **caractérisé en ce que** le solvant contenu dans le milieu de refroidissement et/ou le non-solvant contenu dans celui-ci est respectivement le composé A et le composé B, lesquels sont également utilisés pour produire la solution homogène constituée par le composant polymère et le systèmes solvant.

11. Procédé de production d'une membrane hydrophobe à fibres creuses selon l'une ou plusieurs des revendications 8 à 10, **caractérisé en ce que** la concentration en composé A dans le milieu de refroidissement est supérieure à sa concentration dans la solution de filage.

Fig. 1

Fig. 2

Fig. 3

Fig. 4

Fig. 7

Fig. 8

Fig. 5

Fig. 6

22

Fig. 9

Fig. 10

Fig. 11

Fig. 12

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6146747 A
- EP 0734759 B1
- EP 1520874 A
- EP 1913992 A
- EP 1932582 A
- US 5013339 A
- DE 3329578 A
- US 20050058821 A
- US 20040135274 A
- US 20090283469 A
- US 20090283469 A1
- US 6497752 B1
- US 2011239865 A1
- US 2008210624 A1
- US 2003094409 A1
- EP 0734759 A
- WO 9322034 A
- EP 1230970 A
- DE 2737745 A
- DE 2833493 A
- EP 133882 A
- DE 3617724 A

**In der Beschreibung aufgeführte Nicht-Patentliteratur**

- A framework for better understanding membrane destillation separation process. **M.S. EL-BOURAWI et al.** J. of Membrane Science. Elsevier, 2006, vol. 285, 3-29
- **R.E. KESTING.** Synthetic Polymeric Membranes. John Wiley & Sons, 1985, 261-264
- **VON C.A. SMOLDERS ; J.J. VAN AARTSEN ; A. STEENBERGEN.** *Kolloid-Z. und Z. Polymere,* 1971, vol. 243, 14-20
- **M. KHAYET et al.** Polymer. Elsevier, 2002, vol. 43, 3879-3890